# FASCICULE DE BREVET EUROPEEN

(11) **EP 4 216 730 B1**
(45) Date de publication et mention de la délivrance du brevet: **14.05.2025**
(21) Numéro de dépôt: 21848176.0
(22) Date de dépôt: 13.12.2021
(51) Int. Cl.: A21B 7/00, A23L 7/113, A23L 7/109, A23L 9/10, A23P 30/00, A23P 30/20, A23P 30/25, B01F 27/191, B01F 27/70, B01F 35/92, B01F 35/90

(54) **PROCEDE OPTIMISE DE FABRICATION D'UN PRODUIT ALIMENTAIRE SOUS FORME DE BOULETTES, BOUDINS ET / OU PALETS**
OPTIMIERTES VERFAHREN ZUR HERSTELLUNG EINES NAHRUNGSMITTELS IN FORM VON PELLETS, BÄLLEN UND/ODER PASTETEN
OPTIMISED METHOD FOR MAKING A FOOD PRODUCT IN THE FORM OF PELLETS, BALLS AND/OR PATTIES

(30) Priorité: 18.12.2020 FR 2013703
(43) Date de publication de la demande: 02.08.2023
(60) Demande divisionnaire: 25166830.7
(73) Titulaire: Desvilettes, Martine Marcelle Gérarde, 69008 Lyon (FR)
(72) Inventeur:
(74) Mandataire: Cabinet Didier Martin
(86) Numéro de dépôt international: PCT/FR2021/052299
(87) Numéro de publication internationale: WO 2022/129761

(56) Documents cités:
- EP-A1- 0 169 106
- EP-A1- 0 383 206
- EP-A1- 0 717 935
- WO-A1-99/41997
- FR-A1- 2 605 498
- US-A- 5 216 946

## Description

### DOMAINE TECHNIQUE

La présente invention se rapporte au domaine technique général des procédés de fabrication de produits alimentaires sous forme de boulettes, de boudins et / ou encore de palets.

La présente invention concerne un nouveau procédé de fabrication d'un produit alimentaire sous forme de boulettes, de boudins et / ou de palets, destiné à être réchauffé ou cuit avant d'être consommé.

Est également décrite une nouvelle installation de fabrication d'un produit alimentaire sous forme de boulettes, de boudins et / ou de palets, destiné à être réchauffé ou cuit avant d'être consommé.

### TECHNIQUE ANTERIEURE

On connaît déjà une grande variété de produits alimentaires, typiquement vendus en rayons frais de supermarchés, et qui se présentent sous la forme de boulettes, de boudins ou encore de palets fabriqués par mise en forme d'une composition plus ou moins pâteuse, le plus souvent à base de céréales, et parfois également de légumes et / ou de légumineuses. On retrouve par exemple parmi de tels produits alimentaires, des pâtes alimentaires, parfois farcies, tels des ravioles, des tortellinis, etc. De manière connue, ces produits alimentaires sont destinés être cuits, ou à tout le moins réchauffés, avant consommation par un utilisateur final, en général par immersion totale d'une dose choisie du produit alimentaire dans une grande quantité d'eau chaude ou bouillante, ou encore à la poêle avec une petite quantité d'un corps gras.

Cependant, les procédés et installations de fabrication de tels produits alimentaires sous forme de boulettes, de boudins et / ou encore de palets sont parfois complexes à mettre à œuvre et ne permettent pas toujours l'obtention d'un produit alimentaire dont les propriétés organoleptiques, tant avant qu'après cuisson ou réchauffage, sont optimales du point de vue du consommateur.

Le document FR-2 605 498 A1 décrit un procédé de fabrication d'un produit alimentaire sous forme de boulettes comprenant une phase de mélange et de cuisson simultanée des ingrédients choisis, l'un d'eux au moins contenant de l'amidon, pour obtenir une pâte dans laquelle sensiblement tout l'amidon contenu est gélifié. Le document US-5,216,946 A décrit des procédé et appareil pour préparer des pâtes alimentaires fourrées à cuisson rapide et précuites en préconditionnant un mélange d'amidon avec de la vapeur et de petites quantités d'un lubrifiant interne pour produire un mélange semi-humide et partiellement cuit qui est cuit et refroidi dans des conditions contrôlées dans un extrudeuse à double vis co-rotative avec une configuration de vis à faible cisaillement, puis co-extrudé en pâte alimentaire fourrée, laquelle peut ensuite être séchée ou autrement traitée.

### EXPOSE DE L'INVENTION

Les objets assignés à l'invention visent par conséquent à apporter une réponse aux besoins et problématiques susvisés, et à proposer ainsi un nouveau procédé et une nouvelle installation (non revendiquée) améliorés de fabrication d'un produit alimentaire sous forme de boulettes, de boudins ou encore de palets, qui puisse être simplement et rapidement cuit ou réchauffé avant d'être consommé, et qui présente, après cuisson ou réchauffage, des propriétés organoleptiques améliorées.

Un autre objet de l'invention vise à proposer un nouveau procédé et une nouvelle installation (non revendiquée) de fabrication d'un tel produit alimentaire, lequel présente des qualités organoleptiques tout à fait intéressantes pour le consommateur, avec en particulier une texture en bouche alliant idéalement fondant et élasticité.

Un autre objet de l'invention vise à proposer un nouveau procédé et une nouvelle installation (non revendiquée) de fabrication d'un tel produit alimentaire, qui sont de conception et de mise en œuvre relativement simples.

Un autre objet de l'invention vise à proposer un nouveau procédé et une nouvelle installation (non revendiquée) qui permettent la fabrication d'un tel produit alimentaire à cadence élevée, en particulier dans un contexte industriel.

Un autre objet de l'invention vise à proposer un nouveau procédé et une nouvelle installation (non revendiquée) qui permettent la fabrication d'un tel produit alimentaire à coûts maîtrisés.

Un autre objet de l'invention vise à proposer un nouveau procédé et une nouvelle installation (non revendiquée) qui permettent la fabrication d'un tel produit alimentaire, qui conserve longtemps d'excellentes qualités tant organoleptiques que bactériologiques avant sa cuisson ou son réchauffage.

Un autre objet de l'invention vise à proposer un nouveau procédé de fabrication d'un tel produit alimentaire, dont la mise en œuvre est particulièrement propre, et sûre sur le plan sanitaire.

Un autre objet vise à proposer une nouvelle installation (non revendiquée) de fabrication d'un tel produit alimentaire, dont l'encombrement est particulièrement bien maîtrisé.

Les objets assignés à l'invention sont atteints à l'aide d'un procédé selon la revendication n° 1.

Les objets assignés à l'invention sont également atteints à l'aide d'une installation (non revendiquée) de fabrication d'un produit alimentaire sous forme de boulettes, boudins et / ou palets, destiné à être réchauffé ou cuit avant d'être consommé, comprenant :
- un poste de malaxage et de cuisson simultanés d'un mélange formé à partir d'au moins une farine et / ou une semoule d'au moins une céréale contenant des protéines capables de former du gluten, d'un produit de tubercule de *Solanum tuberosum* et d'un liquide d'hydratation, pour malaxer et cuire ledit mélange pendant un temps de malaxage-cuisson compris entre 1 min et 15 min et de manière obtenir, à l'issue du malaxage et de la cuisson simultanés, une composition pâteuse présentant une température moyenne comprise entre 80 °C et 100 °C, et
- un poste de formage de boulettes, boudins et / ou palets à partir de ladite composition pâteuse.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :

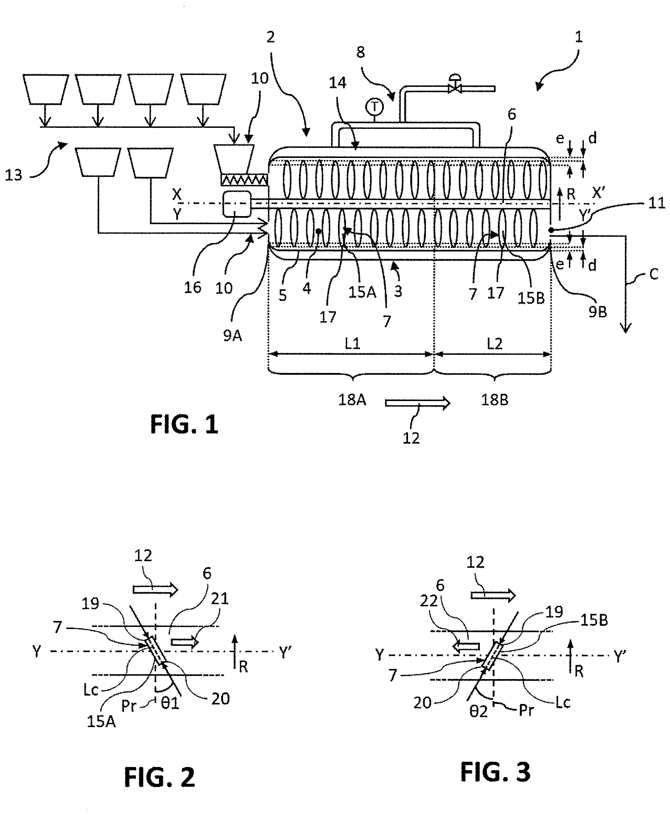

- la figure 1 illustre, de manière schématique, un exemple de réalisation d'un poste de malaxage et de cuisson simultanés que comprend une installation de fabrication permettant de mettre en œuvre le procédé de fabrication conforme à l'invention ;
- la figure 2 illustre, de manière schématique, un détail de conception avantageuse d'un malaxeur-cuiseur que comprend le poste de malaxage et de cuisson simultanés de la figure 1 ;
- la figure 3 illustre, de manière schématique, un autre détail de conception avantageuse du malaxeur-cuiseur du poste de malaxage et de cuisson simultanés de la figure 1 ;

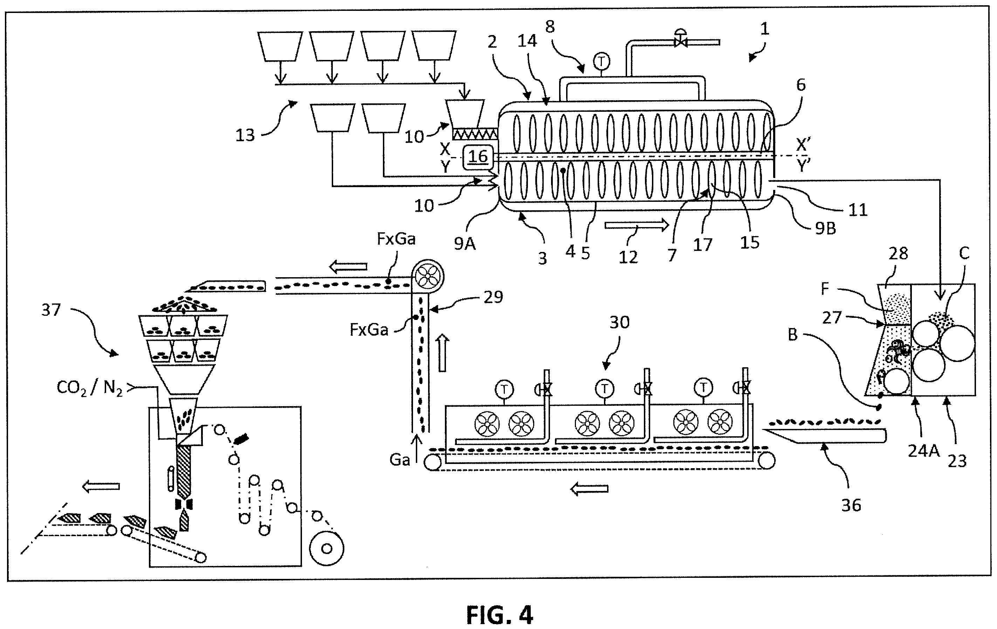

- la figure 4 illustre, de manière schématique, un exemple de réalisation d'une installation de fabrication permettant de mettre en œuvre le procédé de fabrication conforme à l'invention, dans laquelle un système d'élimination d'une farine d'enrobage des boulettes, boudins et / ou palets comprend un transporteur pneumatique ;

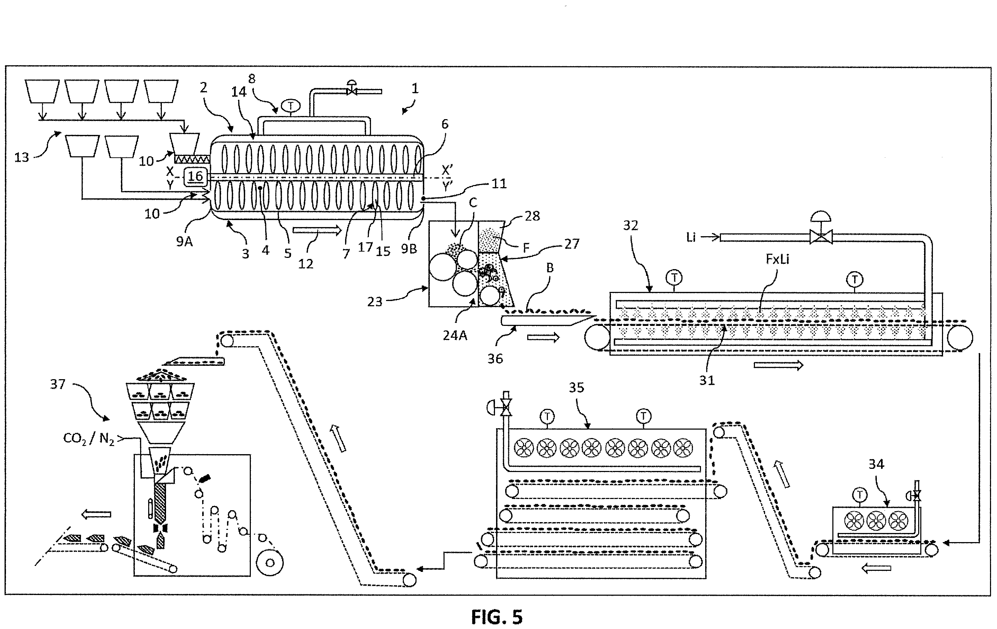

- la figure 5 illustre, de manière schématique, un autre exemple de réalisation d'une installation de fabrication permettant de mettre en œuvre le procédé de fabrication conforme à l'invention, dans laquelle un système d'élimination d'une farine d'enrobage des boulettes, boudins et / ou palets comprend un tunnel de pasteurisation ;

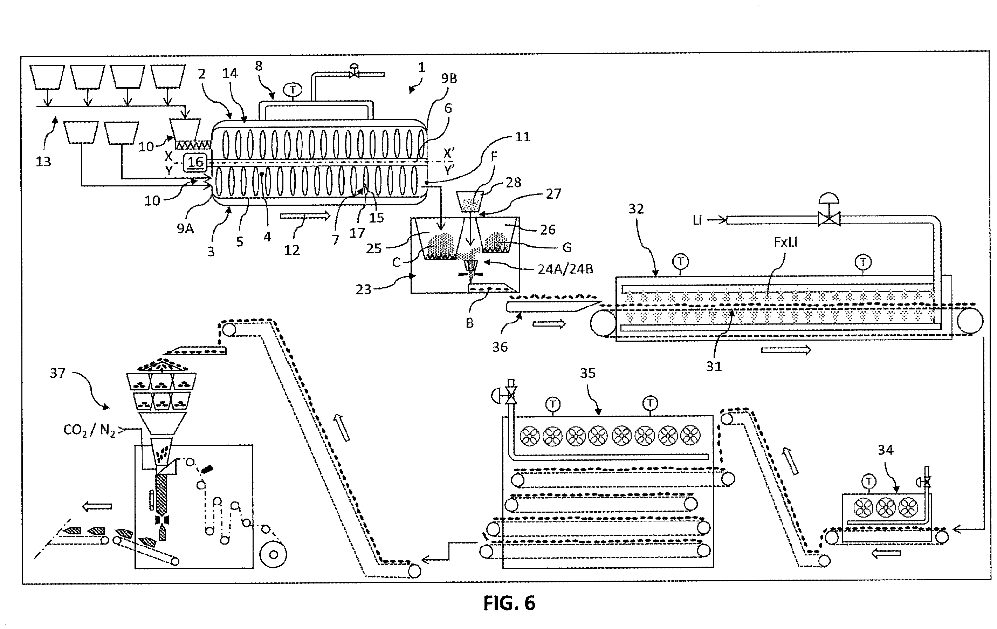

- la figure 6 illustre, de manière schématique, un autre exemple de réalisation d'une installation de fabrication permettant de mettre en œuvre le procédé de fabrication conforme à l'invention, dans laquelle un poste de formage des boulettes, boudins et / ou palets comprend un dispositif d'association par co-extrusion d'une composition pâteuse avec une farce, et dans laquelle un système d'élimination d'une farine d'enrobage des boulettes, boudins et / ou palets comprend un tunnel de pasteurisation ;

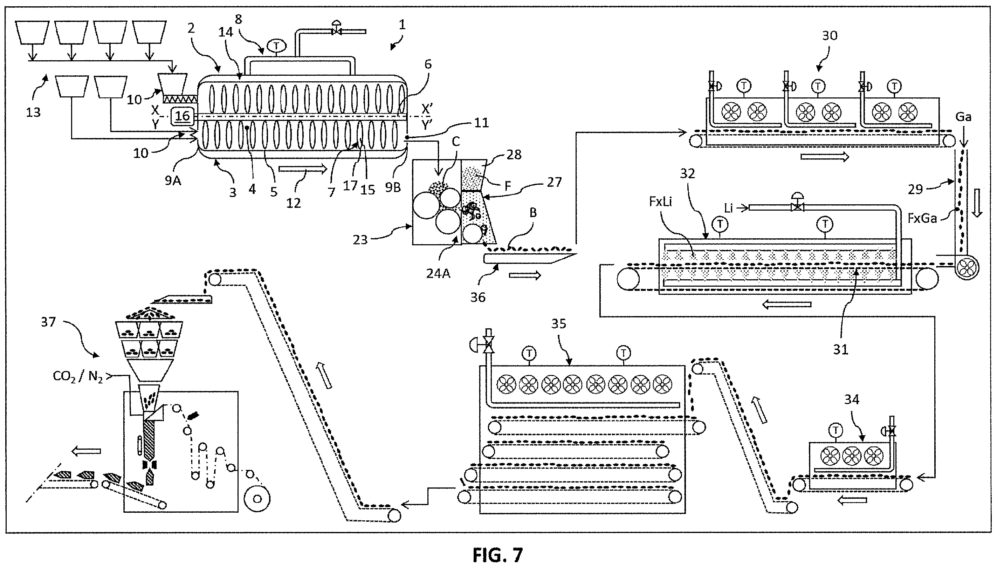

- la figure 7 illustre, de manière schématique, un autre exemple de réalisation d'une installation de fabrication permettant de mettre en œuvre le procédé de fabrication conforme à l'invention, dans laquelle un système d'élimination d'une farine d'enrobage des boulettes, boudins et / ou palets comprend un transporteur pneumatique et un tunnel de pasteurisation ;

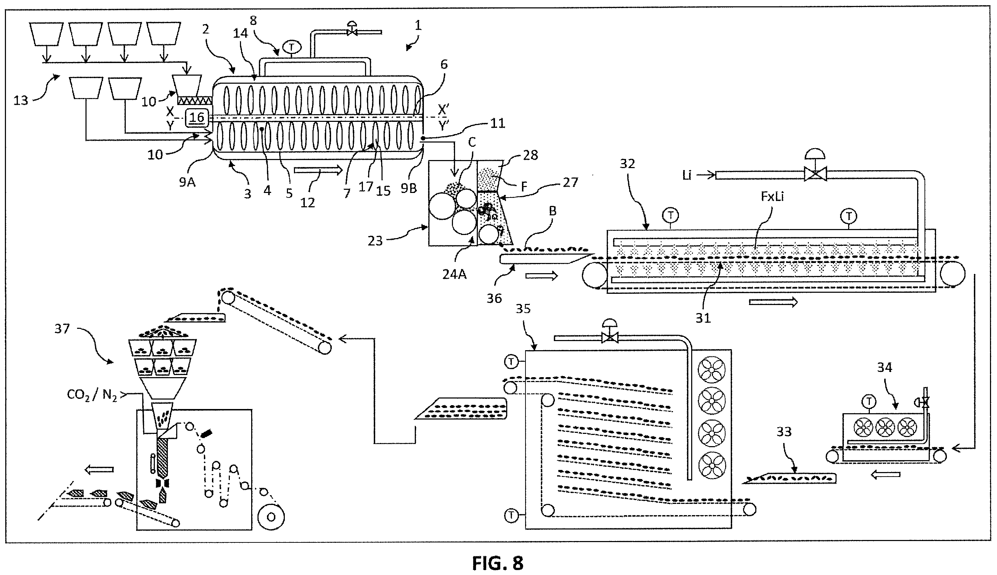

- la figure 8 illustre, de manière schématique, un autre exemple de réalisation d'une installation de fabrication permettant de mettre en œuvre le procédé de fabrication conforme à l'invention, dans laquelle un système d'élimination d'une farine d'enrobage des boulettes, boudins et / ou palets comprend un tunnel de pasteurisation et un moyen vibrant.

### MANIERES DE REALISER L'INVENTION

L'invention concerne un nouveau procédé de fabrication d'un produit alimentaire sous forme de boulettes, boudins et / ou palets B, lequel produit alimentaire est destiné à être réchauffé ou cuit avant d'être consommé. Il s'agit donc d'un produit alimentaire, avantageusement destiné à l'alimentation humaine, qui n'est pas prévu pour être consommé, mangé, en l'état, mais qui nécessite au contraire une opération préalable de réchauffage ou de cuisson afin de développer pleinement ses qualités organoleptiques. De préférence, ledit produit alimentaire est destiné à être réchauffé ou cuit à la poêle, c'est-à-dire à être poêlé. Bien connue en tant que telle, une telle opération de réchauffage ou de cuisson à la poêle consistera typiquement à réchauffer ou cuire une quantité choisie dudit produit alimentaire sous forme de boulettes, boudins et / ou palets B avec un corps gras (tel que par exemple de l'huile végétale, du beurre ou encore de la margarine) dans une poêle (ou une sauteuse ou tout autre récipient de cuisine adéquat) posée sur une plaque de cuisson classique, à couvert ou à découvert (le terme « poêler » étant avantageusement considéré comme un synonyme du terme « sauter » dans le contexte de l'invention). A l'issue d'une telle opération de réchauffage ou de cuisson à la poêle, le produit alimentaire est alors chaud, d'aspect avantageusement doré, plus ou moins bruni, et prêt à être ingéré en l'état. Alternativement, ledit produit alimentaire peut être destiné à être réchauffé ou cuit par immersion dans une grande quantité d'un liquide chaud, comme par exemple de l'eau portée à ébullition. De préférence, il s'agit d'un procédé de fabrication en continu, qui peut être avantageusement mis en œuvre de manière industrielle, à l'aide d'une installation de fabrication au moins partiellement automatisée.

Le procédé selon l'invention comprend une étape de malaxage et de cuisson simultanés d'un mélange formé à partir au moins d'une farine et / ou d'une semoule d'au moins une céréale contenant des protéines capables de former du gluten et d'un produit de tubercule de *Solanum tuberosum,* en tant qu'ingrédients de base, et d'un liquide d'hydratation, pour obtenir une composition pâteuse C (ou pâte), c'est-à-dire une substance molle, malléable, ayant la consistance d'une pâte. Le procédé selon l'invention comprend, à la suite de ladite étape de malaxage et de cuisson simultanés, une étape de formage de boulettes, boudins et / ou palets à partir de ladite composition pâteuse C. Cette étape de formage sera ultérieurement décrite plus en détails.

La mise en œuvre d'une céréale (ou d'un mélange de céréales) qui contient des protéines (typiquement des prolamines et des gluténines) capables de former du gluten, afin de conférer en outre à la composition pâteuse C une certaine élasticité, laquelle contribue avantageusement notamment à une bonne tenue du produit alimentaire lors du réchauffage ou de la cuisson, et à l'obtention d'une texture relativement ferme et élastique du produit alimentaire après réchauffage ou cuisson de ce dernier. Par ailleurs, la mise en œuvre de céréale(s) permet notamment, de manière générale, de conférer au produit alimentaire un profil nutritionnel particulier, en particulier sur le plan glycémique. De préférence, ladite céréale est du blé (*Triticum æstivum, Triticum turgidum, Triticum monococcum,* etc.). Ladite farine de céréale est alors typiquement une farine de blé tendre (*Triticum æstivum*)*,* ladite semoule de céréale étant typiquement une farine de blé dur (*Triticum turgidum* subsp. *durum*)*.* Le blé présente en effet l'intérêt d'être généralement bien apprécié des consommateurs, et d'être en outre disponible en grandes quantités et à coût modéré à travers le monde. Bien évidemment, une ou plusieurs autres céréales contenant des protéines capables de former du gluten pourraient être mise en œuvre, tel que par exemple de l'orge (*Hordeum vulgare*)*,* de l'épeautre (*Triticum spelta*), du seigle (*Secale cereale* L.), de l'avoine (dont *Avena sativa* L.), etc.

De préférence, ledit produit de tubercule de *Solanum tuberosum* est un produit obtenu à partir de tubercule de *Solanum tuberosum* au moins partiellement cuit (en amont de ladite étape de malaxage et de cuisson simultanés). Ainsi, ledit produit de tubercule de *Solanum tuberosum* comprend préférentiellement de l'amidon au moins partiellement gélatinisé. De préférence, ledit produit de tubercule de *Solanum tuberosum* est formé de flocons (préférentiellement déshydratés) *et* / *ou* de poudre *et* / *ou* de granules de tubercule de *Solanum tuberosum,* ce qui en facilite le dosage et la mise en œuvre. Alternativement, ledit produit de tubercule de *Solanum tuberosum* pourrait, par exemple, être formé d'une purée de tubercule de *Solanum tuberosum* (c'est-à-dire une préparation humide de tubercule de *Solanum tuberosum* écrasé). La mise en œuvre de tubercule de *Solanum tuberosum* permet avantageusement de conférer au produit alimentaire des propriétés organoleptiques particulièrement appréciées par les consommateurs, notamment en termes de texture, de goût et de couleur.

Ledit liquide d'hydratation permet avantageusement d'hydrater le mélange, en particulier dans le cas où le ou les ingrédient(s) de base est (sont) initialement sous forme sèche ou à tout le moins insuffisamment humide pour permettre l'obtention d'une composition de consistance pâteuse. Il est à noter que le liquide d'hydratation peut éventuellement être déjà inclus, en tout ou partie, dans le produit de tubercule de *Solanum tuberosum,* en particulier dans le cas où ce dernier n'est pas sous forme sèche (déshydratée) et forme par exemple une purée. En outre, le liquide d'hydratation permet avantageusement aux protéines formatrices de gluten de former du gluten par hydratation. De préférence, le liquide d'hydratation est de l'eau, mais il pourrait éventuellement être par exemple du lait ou encore un liquide d'origine végétale (jus, infusion, émulsion d'une farine végétale en suspension dans de l'eau, etc.).

Selon un mode de réalisation particulier, qui permet avantageusement d'obtenir des boulettes, boudins et / ou palets B dont la texture allie idéalement fondant et élasticité, ledit mélange est formé à partir au moins de :
- 15 % à 40 % de farine et / ou une semoule d'au moins une céréale contenant des protéines capables de former du gluten (par exemple environ 30 %, de préférence du blé), en masse dudit mélange (c'est-à-dire en proportion massique de la masse totale du mélange au début de l'étape de malaxage et de cuisson simultanés), et
- 10 % à 25 % de produit de tubercule de *Solanum tuberosum* (par exemple environ 18 %, de préférence sous la forme de flocons déshydratés de produit de tubercule de *Solanum tuberosum* au moins partiellement cuit), en masse dudit mélange.

La teneur dudit mélange en liquide d'hydratation (de préférence, de l'eau) est alors quant à elle préférentiellement comprise entre 40 % à 60 % environ, et plus préférentiellement encore comprise entre 45 % à 55 % environ (par exemple environ 48-49 %) en masse dudit mélange.

Bien évidemment, d'autres ingrédients que ceux précités peuvent être mis en œuvre de manière complémentaire, selon notamment les propriétés organoleptiques (texture, couleur, saveur, odeur, etc.) ou encore nutritionnelles que l'on cherche à conférer au produit alimentaire. Par exemple, le mélange pourra être formé à partir d'un ou plusieurs ingrédients additionnels :
- à base d'un ou plusieurs autres tubercules par exemple choisi(s) parmi : *Ipomoea batatas, Manihot esculenta* ou encore *Helianthus tuberosus,* et / ou
- à base d'une ou plusieurs autres plantes comestibles par exemple choisie(s) parmi : *Spinacia oleracea, Beta vulgaris L.* subsp. *vulgaris, Daucus carota* subsp. *sativus, Brassica oleracea* L. var. *botrytis L., Brassica oleracea* var. *italica, Pisum sativum* subsp. *sativum* var. *sativum, Cucurbita pepo, Cucurbita maxima, Cucurbita moschata* ou encore *Cucurbita ficifolia, et* / ou
- à base d'un ou plusieurs produits carnés (porc, volaille, etc.), d'un ou plusieurs produits de la mer ou d'eau douce (poissons, mollusques, crustacés, etc.), d'un ou plusieurs fromages ou spécialités fromagères, etc.

Toujours de manière complémentaire aux ingrédients susvisés, le mélange pourrait être en outre formé à partir d'une ou plusieurs farine(s), semoule(s) ou combinaison d'une farine et d'une semoule d'au moins un légume sec ou légumineuse (par exemple de l'une ou l'autre des espèces *Lens culinaris, Pisum spp., Cicer arietinum, Phaseolus spp.* ou encore *Vicia faba, Lupinus spp*.), et / ou de fruits de *Castanea sativa, Juglans regia* ou encore *Corylus avellana.* Par ailleurs, ledit mélange pourra contenir un ou plusieurs additifs alimentaires, et / ou un plusieurs arômes alimentaires, et / ou un ou plusieurs colorants alimentaires (par exemple, du curcuma), et / ou un ou plusieurs exhausteurs de goût, et / ou du sel, et / ou de la matière grasse (par exemple une huile végétale, telle que de l'huile de colza par exemple). Le mélange est en revanche préférentiellement dépourvu d'agent levant, c'est-à-dire de substance, de matière ou d'additif alimentaire (naturel(le) ou synthétique) qui permettrait à la composition pâteuse C d'augmenter en volume et de diminuer en densité en dégageant un gaz, par exemple du dioxyde de carbone. Un agent levant (ou agent de levage) se présente habituellement sous la forme d'un agent de fermentation (levain, levure, etc.) ou d'un agent de levage chimique (poudre à lever ou levure chimique, comprenant typiquement un agent basique (par exemple du bicarbonate de sodium), un agent acide (par exemple de l'acide tartrique ou du pyrophosphate de sodium) et un agent stabilisant (par exemple de l'amidon)). Ainsi, la composition pâteuse C est avantageusement obtenue sans levage biologique (et donc sans fermentation) ou chimique.

Ladite étape de malaxage et de cuisson simultanés consiste donc à malaxer, à pétrir, le mélange formé à partir au moins des ingrédients de base susvisés et du liquide d'hydratation, tout en soumettant simultanément ce mélange à un apport de chaleur (ou traitement thermique) pour cuire au moins partiellement ledit mélange et modifier ainsi les propriétés physico-chimiques initiales des ingrédients, pour obtenir de la sorte ladite composition pâteuse C. Le malaxage consiste donc avantageusement à travailler, à pétrir, mécaniquement le mélange en cours de cuisson afin d'en assurer l'homogénéité. Typiquement, la cuisson au moins partielle du mélange pourra se traduire par un phénomène de gélatinisation au moins partielle (et de préférence totale) d'amidon et / ou de gluten contenu(s) dans ledit mélange. Plus précisément, le mélange est malaxé et cuit au cours de ladite étape de malaxage et de cuisson simultanés
- pendant un temps de malaxage-cuisson compris entre 1 min et 15 min, de préférence compris entre 1 min et 10 min, de préférence compris entre 1 min et 8 min, de préférence compris entre 1 min et 5 min, de préférence encore compris entre 2 min et 5 min, et
- de manière qu'à l'issue de ladite étape de malaxage et de cuisson simultanés (c'est-à-dire une fois ledit temps de malaxage-cuisson écoulé), ladite composition pâteuse C présente une température moyenne comprise entre 80 °C et 100 °C.

A ce titre, le mélange est avantageusement porté, au cours de l'étape de malaxage et de cuisson et pendant ledit temps de malaxage-cuisson, à une température moyenne de malaxage-cuisson avantageusement comprise entre 50 °C et 100 °C, de préférence comprise entre 70 °C et 100 °C, de préférence encore comprise entre 80 °C et 100 °C (étant entendu qu'un gradient de température peut être observé au fil du temps de malaxage-cuisson et / ou au sein de la masse du mélange, et que la température peut très localement excéder 100 °C, en particulier au voisinage immédiat de la paroi intérieure 5 de la chambre interne 4 du malaxeur-cuiseur 2 qui sera décrit plus loin). La mise en œuvre d'une telle étape de malaxage et de cuisson simultanés, avec de telles conditions particulières de temps de malaxage-cuisson et de température de la composition pâteuse C obtenue, conduit de manière tout à fait intéressante à l'obtention d'une composition pâteuse C à partir de laquelle il est possible d'obtenir ensuite un produit alimentaire présentant une texture particulièrement homogène et régulière, et d'une élasticité bien contrôlée. Le produit alimentaire ainsi obtenu peut être facilement et rapidement réchauffé ou cuit (en cas typiquement de cuisson partielle du mélange) en vue de sa consommation, tout en conservant une très bonne tenue au cours de son réchauffage ou de sa cuisson. Une fois réchauffé ou cuit, le produit alimentaire obtenu présente des qualités organoleptiques tout à fait intéressantes pour le consommateur, en particulier en matière de texture en bouche, alliant de manière optimale fondant et élasticité. Au contraire, lorsque l'étape de malaxage et de cuisson simultanés n'est pas réalisée dans les conditions particulières susvisées (en matière de temps de malaxage-cuisson et de température moyenne à l'issue de l'étape de malaxage et de cuisson simultanés), les caractéristiques viscoélastiques de la composition pâteuse C obtenue conduisent à l'obtention d'un produit alimentaire qui présente, après cuisson ou réchauffage, une texture qui est soit trop molle, pâteuse, soit au contraire trop ferme voire « caoutchouteuse ».

Il a été observé que les propriétés viscoélastiques de la composition pâteuse C, et les qualités organoleptiques du produit alimentaire obtenu à parti de cette dernière, peuvent encore être avantageusement améliorées par la mise en œuvre d'un certain nombre de mesures techniques additionnelles s'agissant de la réalisation de l'étape de malaxage et de cuisson simultanés, hormis celles déjà proposées ci-dessus en matière de composition du mélange, qui vont être maintenant être décrites. Tout d'abord, il s'avère particulièrement avantageux que l'étape de malaxage et de cuisson simultanés soit réalisée de manière qu'à l'issue de cette dernière, la température moyenne de la composition pâteuse C est d'une part strictement supérieure à 90 °C et d'autre part inférieure ou égale à 100 °C, et de préférence encore sensiblement égale à 98 °C (± 0,1 °C). Cela s'avère particulièrement étonnant, dans la mesure où l'on aurait pu s'attendre, au contraire, à une dégradation préjudiciable des propriétés viscoélastiques de la composition pâteuse C lorsque cette dernière atteint une température supérieure ou égale à 90 °C. De manière alternative ou complémentaire, il est préférable que la composition pâteuse C présente, à l'issue de l'étape de malaxage et de cuisson simultanés, une humidité relative sensiblement comprise entre 30 % et 70 %, et de préférence sensiblement comprise entre 45 % et 60 %, ce qui peut être obtenu, par exemple, en modulant la quantité de liquide d'hydratation mise en œuvre pour former le mélange. Une humidité relative comprise entre 45 % et 60 % d'humidité contribue avantageusement à conférer à la composition pâteuse C un caractère ni trop collant ni trop friable, qui facilite la mise en forme ultérieure de la composition pâteuse C et permet d'obtenir un produit alimentaire présentant un aspect visuel satisfaisant pour le consommateur.

Toujours de manière alternative ou complémentaire, il est préférable que le liquide d'hydratation soit à une température initiale (c'est-à-dire lors de son adjonction aux ingrédients de base) qui est sensiblement comprise entre 30 °C et 80 °C, et de préférence comprise entre 40 °C et 70 °C. En effet, cela contribue notamment à favoriser la formation du mélange, et à l'obtention d'une texture de composition pâteuse optimale.

D'autres mesures techniques qui peuvent avantageusement être mises en œuvre, de manière complémentaire ou alternative à celles déjà identifiées ci-dessus, concernent plus spécifiquement la conception des moyens techniques pour la réalisation de l'étape de malaxage et de cuisson simultanés. En particulier, ladite étape de malaxage et de cuisson simultanés est préférentiellement réalisée à l'aide d'au moins un malaxeur-cuiseur 2 comprenant un réceptacle 3 définissant une chambre interne 4 pourvue d'une paroi intérieure 5, un arbre 6 monté à rotation au sein de la chambre interne 4 et pourvu de moyens de malaxage 7, et un moyen de chauffage 8 de la paroi intérieure 5. Les ingrédients de base et le liquide d'hydratation peuvent être introduits au sein de la chambre interne 4 du malaxeur-cuiseur 2 de manière séparée, ou éventuellement déjà mélangés entre eux pour certains au moins. Eventuellement, plusieurs malaxeurs-cuiseurs 2 peuvent être mis en œuvre en parallèle pour augmenter la cadence de préparation de la composition pâteuse C. Typiquement de forme cylindrique à base circulaire, la chambre interne 4 s'étend avantageusement, selon une direction d'extension longitudinale moyenne X-X', entre une première extrémité 9A au niveau de laquelle peuvent être agencés un ou plusieurs dispositifs d'introduction 10 des ingrédients de base et du liquide d'hydratation au sein de la chambre interne 4, et une deuxième extrémité 9B opposée, au niveau de laquelle la chambre interne 4 est avantageusement pourvue d'une ouverture de sortie 11 de la composition pâteuse C*.* L'arbre 6 est avantageusement monté à rotation au sein de la chambre interne 4 selon un axe de rotation Y-Y' sensiblement parallèle à la direction d'extension longitudinale moyenne X-X' de la chambre interne 4, et les moyens de malaxage 7 sont avantageusement conformés et configurés, dans leur ensemble, pour entraîner une progression (générale) du mélange au sein de la chambre interne 4 en direction de la deuxième extrémité 9B de cette dernière (figure 1 notamment). Le temps de malaxage-cuisson correspond donc alors avantageusement au temps de séjour du mélange au sein de la chambre interne 4 du malaxeur-cuiseur 2, et la température moyenne de la composition pâteuse C est avantageusement mesurée (à l'aide de toute sonde ou capteur de température connu adéquat) en sortie du malaxeur-cuiseur 2, en aval donc de l'ouverture de sortie 11 de ce dernier.

Avantageusement, l'étape de malaxage et de cuisson simultanés est réalisée à l'aide dudit malaxeur-cuiseur 2 de manière continue, et de préférence avec un débit massique de composition pâteuse C qui est avantageusement compris entre 200 et 2 200 kilogrammes par heure (kg / h), suivant le dimensionnement du malaxeur-cuiseur 2 (typiquement une longueur de chambre interne 4 comprise entre 1 300 mm et 2 600 mm pour un diamètre interne compris entre 180 mm et 400 mm, ce qui permet une production du produit alimentaire à une cadence particulièrement élevée, et donc à un coût particulièrement avantageux. Ainsi, le malaxeur-cuiseur 2 est alimenté en continu en entrée en ingrédients de base et en liquide d'hydratation, et produit en continu la composition pâteuse C en sortie (bien que pas nécessairement sous la forme d'un flux ininterrompu, parfaitement continu, de composition pâteuse C).

De préférence, le moyen de chauffage 8 de la paroi intérieure 5 est conçu et configuré pour porter cette dernière à une température préférentiellement comprise entre 100 °C et 160 °C. Avantageusement, le moyen de chauffage 8 de la paroi intérieure 5 de la chambre interne 4 comprend une enveloppe (ou chemise) de chauffe 14, qui entoure la chambre interne 4 (de préférence sur sensiblement toute la longueur et toute la circonférence de cette dernière) et à l'intérieur de laquelle circule un fluide caloporteur (eau chaude, vapeur d'eau, huile diathermique, etc.). De préférence, ledit fluide caloporteur est à une température préférentiellement comprise entre 100 °C et 160 °C.

Les moyens de malaxage 7 du malaxeur-cuiseur 2 sont préférentiellement formés de pales 15, 15A, 15B (ou palettes), de préférence distinctes et distantes les unes des autres, qui s'étendent chacune à partir de l'arbre 6 de manière sensiblement radiale à l'axe de rotation Y-Y' de ce dernier. Avantageusement distribuées en spirale autour dudit axe de rotation, les pales 15, 15A, 15B ne forment donc pas, de préférence, un moyen de malaxage monolithique de type vis sans fin par exemple. L'arbre 6 est typiquement commandé à rotation par un moteur électrique 16 (ou tout autre actionneur adéquat), et ce avantageusement à une vitesse suffisante pour provoquer une centrifugation du mélange et la formation, contre la paroi intérieure 5 chauffée de la chambre interne 4, d'une couche dudit mélange. Autrement dit, la vitesse de rotation de l'arbre 6 est choisie telle que, sous l'effet de la rotation de l'arbre 6 et des pales 15, 15A, 15B, le mélange est projeté radialement contre la paroi intérieure 5 pour y former une couche de mélange. On comprend que la vitesse de rotation de l'arbre 6 pourra notamment dépendre, en pratique, de la quantité de mélange présent dans la chambre interne 4 du malaxeur-cuiseur 2, et du dimensionnement de ladite chambre interne 4, de l'arbre 6 et des moyens de malaxage 7. Une vitesse de rotation adéquate pourra être déterminée, par exemple, en augmentant progressivement la vitesse de rotation de l'arbre 6 jusqu'à observer l'effet de centrifugation recherché. Ladite couche forme alors avantageusement contre la paroi intérieure 5 et suivant la direction d'extension longitudinale X-X' de la chambre interne 4, une couche mince, continue et turbulente dudit mélange. De préférence, ladite couche de mélange présente une épaisseur e moyenne comprise entre 1 mm et 40 mm, et plus préférentiellement comprise entre 2 mm et 30 mm (figure 1 notamment). Bien évidemment, le volume de mélange présent dans la chambre interne 4 du malaxeur-cuiseur 2 à un instant donné est, dans ce cas, choisi inférieur au volume interne total de la chambre interne 4, en jouant en particulier sur le débit d'alimentation de la chambre interne 4 en ingrédients de base et en liquide d'hydratation. Par exemple, l'arbre 6 peut être mis en rotation à une vitesse avantageusement comprise entre 500 tr / min et 1 000 tr / min (tours par minute), pour un diamètre interne de la chambre interne 4 typiquement compris entre 180 mm et 400 mm. Le fait de venir ainsi plaquer le mélange en couche contre la paroi intérieure 5 chauffée de la chambre interne 4 favorise notamment un transfert thermique efficace entre la paroi intérieure 5 et le mélange, conduisant à une cuisson rapide et homogène de ce dernier.

Avantageusement, chacune des pales 15, 15A, 15B présente une extrémité distale 17, opposée à une extrémité proximale au niveau de laquelle chacune des pales 15, 15A, 15B est fixée à l'arbre 6, et qui est agencée à distance de la paroi intérieure 5 de la chambre interne 4, et de préférence à une distance d sensiblement comprise entre 1 mm et 10 mm, par exemple entre 2 mm et 5 mm (figure 1). Lorsque mélange forme une couche plaquée contre la paroi intérieure 5 de la chambre interne 4, comme envisagé ci-dessus, les pales 15, 15A, 15B ne pénètrent donc avantageusement que partiellement dans l'épaisseur de ladite couche. Cela favorise un bon malaxage du mélange, en générant un effet d'étirement particulier, ou même de cisaillement, du mélange dans une zone adjacente à l'extrémité distale 17 des pales 15, 15A, 15B.

De manière préférentielle, l'orientation angulaire des pales 15, 15A, 15B du malaxeur-cuiseur 2 est variable le long de l'axe de rotation Y-Y' de l'arbre 6. Plus spécifiquement, comme illustré schématiquement en exemple à la figure 1, le malaxeur-cuiseur 2 comprend avantageusement au moins :
- une première portion de travail 18A, qui s'étend axialement (c'est-à-dire suivant l'axe de rotation Y-Y' de l'arbre 6) entre les première et deuxième extrémités 9A, 9B de la chambre interne 4 et dans laquelle les pales 15A présentent une première orientation angulaire relativement à l'axe de rotation Y-Y' de l'arbre 6, pour entraîner une progression axiale du mélange au sein de ladite première portion de travail 18A à une première vitesse, et
- une deuxième portion de travail 18B, qui prolonge axialement la première portion de travail 18A en direction de la deuxième extrémité 9B de la chambre interne 4 et dans laquelle les pales 15B présentent une deuxième orientation angulaire (relativement à l'axe de rotation Y-Y' de l'arbre 6) différente de ladite première orientation angulaire, pour entraîner une progression axiale du mélange au sein de ladite deuxième portion de travail 18B à une deuxième vitesse, inférieure (strictement) à ladite première vitesse.

Ladite progression axiale du mélange se fait selon un sens de progression général, représenté par une flèche 12 dans les exemples illustrés aux figures. En d'autres termes, chaque pale 15, 15A, 15B s'étend longitudinalement entre ladite extrémité distale 17 et ladite extrémité proximale, selon une direction d'extension qui est avantageusement orthogonale à l'axe de rotation Y-Y' de l'arbre 6, et latéralement entre un premier bord latéral 19 et un deuxième bord latéral 20, reliés entre eux par un segment de droite dit ligne de corde Lc (ou corde de profil). Chaque pale 15, 15A, 15B définit par ailleurs, lorsque l'arbre 6 est mis en rotation, un plan de rotation Pr qui est orthogonal à l'axe de rotation Y-Y' de l'arbre 6 et donc de la pale 15, 15A, 15B. Ainsi, chaque pale 15, 15A, 15B présente un calage ou angle de calage ou encore pas θ1, θ2 (« *pitch* »), qui est l'angle formé par la ligne de corde Lc et le plan de rotation Pr de la pale 15, 15A, 15B (figures 2 et 3).

Dans la première portion de travail 18A, chaque pale 15A présente un (premier) pas θ1 tel que, pour un sens de rotation R prédéfini de l'arbre 6, chaque pâle 15A génère un effort de poussée du mélange en direction de la deuxième extrémité 9B de la chambre interne 4 (par convention, on choisira de qualifier de « positif » un tel pas de poussée). A la figure 2, une vue schématique tronquée de la première portion de travail 18A est ainsi illustrée en exemple. La flèche 21 indique l'orientation de cet effort de poussée en relation avec le sens de progression général - illustré par la flèche 12 - du mélange au sein de la chambre interne 4. Avantageusement, ledit (premier) pas θ1 est compris entre + 0° et + 45°, et de préférence encore compris entre + 5° et + 30°, et par exemple égal à + 10° pour obtenir un bon compromis entre l'effort de malaxage exercé par les pales 15A et la première vitesse de progression du mélange à travers la première portion de travail 18A, en s'assurant que la totalité du mélange présent est bien déplacé, raclé, par les pales 15A. Dans la deuxième portion de travail 18B, chaque pale 15B présente un (deuxième) pas θ2 tel que, pour ledit sens de rotation R prédéfini de l'arbre 6, chaque pâle 15B génère un effort de poussée moindre du mélange en direction de la deuxième extrémité 9B de la chambre interne 4, ou comme on le verra ci-après un effort de poussée du mélange en direction de la première extrémité 9A de la chambre interne 4, de sorte à ralentir la progression du mélange (deuxième vitesse de progression inférieure la première vitesse de progression). L'orientation angulaire différente des pales 15B dans la deuxième portion de travail 18B, et la différence de vitesse qui en découle, tendent ainsi avantageusement à créer un phénomène de freinage, de rétention du mélange, à l'intérieur de la chambre interne 4, qui a notamment pour effet de comprimer le mélange, et de le plaquer plus fortement contre la paroi intérieure 5 chauffée de la chambre interne 4. Ainsi, on accentue encore avantageusement le malaxage et la cuisson du mélange au sein de la deuxième portion de travail 18B, après une première phase de malaxage et de cuisson d'intensité moindre au sein de la première portion de travail 18A.

Si le deuxième pas θ2 des pales 15B de la deuxième portion de travail 18B peut être « positif », et par exemple compris entre + 5° et + 30°, il est plus avantageux encore que le deuxième pas θ2 soit « négatif », c'est-à-dire que la deuxième orientation angulaire des pales 15B de la deuxième portion de travail 18B soit inversée, c'est à-dire opposée (figure 3), par rapport à la première orientation angulaire des pales 15A de la première portion de travail 18A (figure 2). Chaque pâle 15B de la deuxième portion de travail 18B génère, prise en tant que telle, un effort de poussée du mélange en direction de la première extrémité 9A de la chambre interne 4. Il en résulte ainsi un phénomène de « contre-poussée » du mélange. Le deuxième pas θ2 peut alors être avantageusement compris entre - 5° et - 30°, et par exemple égal à - 10°. A la figure 3, une vue schématique tronquée de la deuxième portion de travail 18B est ainsi illustrée en exemple. La flèche 22 indique l'orientation de cet effort de contre-poussée en relation avec le sens de progression général - illustré par la flèche 12 - du mélange au sein de la chambre interne 4.

De préférence, la longueur L2 de la deuxième portion de travail 18B, considérée suivant l'axe de rotation Y-Y' de l'arbre 6, est inférieure ou sensiblement égale à la longueur L1 respective de la première portion de travail 18A (comme illustré en exemple à la figure 1), notamment de manière à limiter toutefois un risque de dégradation du mélange sous l'effort de malaxage et sous l'effet de l'apport de chaleur par le moyen de chauffage 8 de la paroi intérieure 5. Dans le cas préférentiel où l'écart entre deux pales 15, 15A, 15B successives, selon une ligne parallèle à l'axe de rotation Y-Y' de l'arbre 6, est identique suivant toute la longueur de l'axe de rotation Y-Y' de l'arbre 6, cela se traduit avantageusement par le fait que la deuxième portion de travail 18B comprend donc avantageusement un nombre de pales 15B qui est inférieur ou sensiblement égal au nombre de pales 15A que comprend respectivement la première portion de travail 18A. Plus préférentiellement encore, les longueurs L1, L2 des première et deuxième portions de travail 18A, 18B peuvent être choisies telles que le rapport L1 / L2 de la longueur L1 de la première portion de travail 18A sur la longueur L2 de la deuxième portion de travail 18B est sensiblement compris entre 1 et 4.

Avantageusement, le malaxeur-cuiseur 2 peut comprendre davantage encore de portions de travail successives, et en particulier au moins une troisième portion de travail (non illustrée), qui prolonge axialement la deuxième portion de travail 18B en direction de la deuxième extrémité 9B de la chambre interne 4 et dans laquelle les pales 15 présentent une troisième orientation angulaire différente de ladite deuxième orientation angulaire, pour entraîner une progression axiale du mélange au sein de ladite troisième portion de travail à une troisième vitesse, supérieure à ladite deuxième vitesse. Ainsi, après avoir ralenti au sein de la deuxième portion de travail 18B, le mélange poursuit son malaxage et sa cuisson au sein de la troisième portion de travail selon une vitesse de progression plus élevée que dans la deuxième portion de travail 18B. De préférence, la troisième orientation angulaire est inversée par rapport à la deuxième orientation angulaire. On notera que les portions de travail 18A, 18B dont il est question ci-dessus sont avantageusement des portions (ou portions de malaxage-cuisson) de la chambre interne 4 dans lesquels le mélange est effectivement malaxé et cuit simultanément. Ainsi, dans l'hypothèse où la paroi intérieure 5 de la chambre interne 4 n'est pas chauffée sur toute sa longueur (considérée selon la direction d'extension longitudinale de la chambre interne 4), et par exemple dans le cas où l'enveloppe de chauffe 14 ne s'étend pas strictement depuis la première extrémité 9A jusqu'à la deuxième extrémité 9B de la chambre interne 4 mais sur une distance plus réduite entre ces deux extrémités 9A, 9B, lesdites portions de travail 18A, 18B correspondront donc à des portions d'une longueur de chauffe effective de la chambre interne 4 (c'est-à-dire le long de laquelle la paroi intérieure 5 est effectivement chauffée par le moyen de chauffage 8).

Bien évidemment, l'invention n'est pas limitée à la réalisation de l'étape de malaxage et de cuisson simultanés à l'aide d'un tel malaxeur-cuiseur 2, et d'autres moyens techniques connus et adéquats pourront être alternativement mis en œuvre, quoique de manière moins avantageuse, sans pour autant sortir du cadre de l'invention.

Comme introduit ci-avant, le procédé selon l'invention comprend, après l'étape de malaxage et de cuisson simultanés qui vient décrite, une étape de formage de boulettes, boudins et / ou palets B (ou tout autre forme analogue, voire même d'un mélange de formes différentes parmi celles précitées, avantageusement massive) à partir de ladite composition pâteuse C. Par boulettes, boudins et / ou palets B, on entend ici avantageusement, des pièces unitaires qui, outre qu'elles présentent une forme générale au moins partiellement arrondie, sont sensiblement pleines, massives, c'est-à-dire dont la masse occupe tout le volume apparent. L'étape de formage consiste donc à mettre en forme la composition pâteuse C obtenue à l'issue de l'étape de malaxage et de cuisson simultanés, pour obtenir un ensemble de boulettes, boudins et / ou palets B de composition pâteuse C, et ce à l'aide de tout dispositif de formage 24A adéquat selon la forme et les dimensions choisies. Par exemple, la composition pâteuse C peut être mise en forme de boulettes B d'un poids unitaire avantageusement compris entre 4 g et 10 g environ, et / ou en forme de boudins (ou bâtonnets) d'une longueur avantageusement comprise entre 6 cm et 10 cm environ, d'un diamètre avantageusement compris entre 6 mm et 15 mm environ et d'un poids unitaire avantageusement compris entre 4 g et 12 g environ, et / ou encore sous la forme de palets d'un diamètre avantageusement compris entre 2 cm et 4 cm environ, d'une épaisseur avantageusement comprise entre 5 mm et 15 mm environ et d'un poids unitaire avantageusement compris entre 4 g et 12 g environ.

De manière préférentielle, l'étape de formage des boulettes, boudins et / ou palets B est réalisée alors que la température de la composition pâteuse C est encore sensiblement comprise entre 50 °C et 100 °C, et de préférence comprise entre 80 °C et 95 °C, à l'issue de l'étape de malaxage et de cuisson simultanés. Cela permet notamment de faciliter la mise en forme de la composition pâteuse C, pour obtenir des boulettes, boudins et / ou palets B de formes parfaitement définies, en préservant au mieux les propriétés viscoélastiques particulières de la composition pâteuse C obtenues grâce à l'étape de malaxage-cuisson décrite ci-avant (et notamment en limitant le phénomène de rétrogradation de l'amidon apporté par les ingrédients de base). Typiquement, l'étape de formage est ainsi avantageusement réalisée de manière immédiatement consécutive à l'étape de malaxage et de cuisson simultanés, de manière à réduire au minimum la déperdition de chaleur de la composition pâteuse C entre son obtention et sa mise en forme.

De manière optionnelle, l'étape de formage des boulettes, boudins et / ou palets B peut comprendre une opération d'association de la composition pâteuse C avec une farce G (ou garniture). De préférence, ladite opération d'association est réalisée par co-extrusion de la composition pâteuse C et de la farce G, ce qui permet d'associer de manière rapide, simple et efficace la composition pâteuse C et la farce G, la composition pâteuse C venant avantageusement envelopper la farce G*.* On obtient de la sorte des boulettes, boudins et / ou palets B farcis (ou fourrés), et par exemple des boudins cylindriques aux extrémités fermées et d'un poids unitaire avantageusement compris entre 6 g et 12 g environ, farce incluse. Par exemple, la farce G peut être une préparation comprenant du fromage ou une spécialité fromagère, et / ou une purée de légume(s) et / ou de la viande hachée, etc. Avantageusement, de tels boulettes, boudins et / ou palets B peuvent être formés de 20 % à 50 % en masse de farce G (par exemple, 30 % en masse) et de 50 % à 80 % en masse de composition pâteuse (par exemple, 70 % en masse). Des proportions différentes peuvent toutefois bien évidemment être mises en œuvre, selon notamment la nature de la composition pâteuse C et / ou de la farce G, ou encore selon le profil organoleptique et / ou nutritionnel recherché du produit alimentaire.

Les plages préférentielles de dimensions et de poids unitaires proposées ci-dessus permettent avantageusement de définir un produit alimentaire bien proportionné, dont la quantité à cuire ou à réchauffer puis à consommer, est facile à doser par le consommateur, et dont la mise en bouche est aisée et digeste sans forcément nécessiter de découpe préalable.

Afin de faciliter l'étape de formage en évitant notamment que les boulettes, boudins et / ou palets B adhèrent notamment au dispositif de formage 24A, et afin d'éviter par ailleurs tout phénomène d'agglomération des boulettes, boudins et / ou palets B entre eux au cours de l'étape de formage, qui nuirait à la bonne définition de la forme du produit alimentaire, le procédé peut avantageusement comprendre une opération de recouvrement (ou opération d'enrobage) d'au moins une partie (et de préférence d'au moins la majorité si non la totalité) d'une surface extérieure des boulettes, boudins et / ou palets B par une farine d'enrobage F. Il s'agit avantageusement d'une farine d'enrobage F alimentaire, typiquement obtenue en broyant et en moulant une ou plusieurs céréales et / ou un ou plusieurs autres produits agricoles alimentaires solides. De préférence, la farine d'enrobage F est une farine d'au moins une céréale, par exemple une farine de blé tendre, de sorte notamment à ne pas modifier sensiblement le goût propre de la composition pâteuse C. Alternativement, il pourrait par exemple s'agir d'une farine de riz, d'un mélange de farines de riz et de blé tendre, etc.

Si la mise en œuvre d'une telle farine d'enrobage F facilite donc la fabrication du produit alimentaire et l'obtention de boulettes, boudins et / ou palets B qui sont de forme bien définie et qui sont parfaitement bien séparés les uns des autres, il a néanmoins été observé que la présence de farine d'enrobage F à la surface extérieure des boulettes, boudins et / ou palets B est susceptible de présenter un certain nombre d'inconvénients vis-à-vis du consommateur final du produit alimentaire. Tout d'abord, sous l'effet d'une humidité de l'environnement entourant les boulettes, boudins et / ou palets B et / ou sous l'effet d'une humidité propre de ces dernières, les grains de la farine d'enrobage F présente sur la surface des boulettes, boudins et / ou palets B peuvent tendre à s'agglomérer en eux et à gonfler, conférant ainsi aux boulettes, boudins et / ou palets B un aspect de surface grumeleux relativement peu esthétique. En outre, dans le cas où la préparation du produit alimentaire est destinée à être réchauffé ou cuit à la poêle en vue de sa consommation, la farine d'enrobage F est susceptible d'absorber de manière inappropriée une quantité importante du corps gras utilisé pour réchauffer ou cuire le produit alimentaire, ce qui peut conduire à l'obtention, après réchauffage ou cuisson, d'un produit alimentaire trop chargé en corps gras de cuisson. De plus, la farine d'enrobage F est susceptible de brûler au contact de la poêle chaude, ce qui peut nuire aux qualités organoleptiques du produit alimentaire en termes de couleur, de goût et d'odeur. A ce titre, le procédé de fabrication peut avantageusement comprendre, postérieurement à ladite étape de formage, une étape d'élimination de tout ou partie (et de préférence d'au moins 50 % en masse) de la farine d'enrobage F présente sur la surface extérieure des boulettes, boudins et / ou palets B (ou étape de défarinage). Qui plus est, il a été observé que, de manière tout à fait intéressante, l'élimination de la farine d'enrobage F permet au produit alimentaire de retrouver une couleur proche de la couleur initiale de la composition pâteuse C. Dans le cas en particulier où l'un au moins des ingrédients de base a été choisi notamment en considération d'une coloration qu'il est intrinsèquement susceptible de conférer à la composition pâteuse C et donc au produit alimentaire, cela permet ainsi avantageusement de limiter, sinon d'éviter totalement, le recours à un colorant alimentaire pour renforcer la couleur des boulettes, boudins et / ou palets B.

De préférence, afin de permettre une élimination particulièrement efficace de la farine d'enrobage F présente à la surface extérieure des boulettes, boudins et / ou palets B, l'étape d'élimination de la farine d'enrobage F est réalisée par soumission des boulettes, boudins et / ou palets B à au moins un flux d'au moins un fluide. En d'autres termes, l'étape d'élimination de la farine d'enrobage F inclut au moins une opération au cours de laquelle les boulettes, boudins et / ou palets B issus de l'étape de formage sont soumis aux effets d'un ou plusieurs flux d'un ou plusieurs fluides, de manière à entraîner une élimination forcée de tout ou partie (et de préférence d'au moins 50 % en masse) de la farine d'enrobage F présente à la surface extérieure des boulettes, boudins et / ou palets B. En effet, il a été observé que, de manière surprenante, la soumission des boulettes, boudins et / ou palets B à au moins un flux d'un fluide s'avère bien plus efficace en matière d'élimination de la farine d'enrobage F que le recours à une opération de passage des boulettes, boudins et / ou palets B sur un moyen vibrant 33 (tel que par exemple, un crible vibrant, un tapis ou une bande de transport vibrant(e), etc.). Ainsi, à l'issue de l'étape d'élimination de la farine d'enrobage F, les boulettes, boudins et / ou palets B présentent un aspect nettement différent (en termes de couleur et d'aspect de surface en particulier) de l'aspect qu'ils présentent initialement en amont de ladite étape d'élimination, dans la mesure où une disparition très sensible, sinon totale, de la farine d'enrobage F peut être observée par comparaison à l'œil nu, sous un éclairage en lumière visible. Typiquement, lorsque la composition pâteuse C présente une couleur jaune par exemple et que la farine d'enrobage F est de couleur blanche par exemple, les boulettes, boudins et / ou palets B recouverts de farine d'enrobage F peuvent alors apparaître sensiblement blancs ou jaune pâle à l'issue de l'étape de formage (selon la quantité de farine d'enrobage déposée). A l'issue de l'étape d'élimination de la farine d'enrobage F, les boulettes, boudins et / ou palets B sont débarrassés en tout ou partie de leur farine d'enrobage et présentent donc une couleur avantageusement plus jaune, c'est-à-dire plus proche de la couleur intrinsèque de la composition pâteuse C.

Selon une première variante, le fluide utilisé au cours de l'étape d'élimination de la farine d'enrobage F est un gaz Ga ou mélange de gaz Ga (flux gazeux FxGa), et de préférence de l'air. Alternativement, il pourrait s'agir d'un autre gaz Ga ou mélange de gaz Ga que de l'air, et par exemple un gaz Ga ou mélange de gaz Ga rares (par exemple du diazote N₂), bien que ça soit potentiellement plus coûteux et complexe à mettre en œuvre.

Selon un mode de réalisation (non illustré) de cette variante, le flux gazeux FxGa est un flux de soufflage, dirigé en direction des boulettes, boudins et / ou palets B. Les caractéristiques du flux gazeux FxGa, et de préférence d'air, en termes de profil géométrique, de débit, de pression ou encore de vitesse, peuvent être avantageusement régulées, définies selon les dimensions boulettes, boudins et / ou palets B, leur quantité, ainsi que selon la quantité de farine d'enrobage présente sur leur surface extérieure. Selon ce mode de réalisation, les boulettes, boudins et / ou palets B sont ainsi avantageusement soumise par au moins un flux de soufflage, dont le frottement contre la surface extérieure des boulettes, boudins et / ou palets B provoque avantageusement l'élimination de tout ou partie de la farine d'enrobage F. Au cours de l'étape d'élimination de la farine d'enrobage F, les boulettes, boudins et / ou palets B peuvent être déplacés, par exemple sur un convoyeur, tandis qu'ils sont soumis aux effets du flux de soufflage, de préférence selon une direction de déplacement orthogonale à une direction de soufflage du flux de soufflage.

Selon un autre mode de réalisation de cette première variante, retenue dans l'exemple de la figure 4, le flux gazeux FxGa est un flux d'aspiration. Là encore, les caractéristiques du flux gazeux, et de préférence d'air, en termes de profil géométrique, de débit, de pression ou encore de vitesse peuvent être avantageusement régulées, définies selon les dimensions des boulettes, boudins et / ou palets B, leur quantité, ainsi que selon la quantité de farine d'enrobage F présente sur leur surface extérieure. De manière particulièrement préférentielle, comme dans l'exemple illustré à la figure 4, ledit flux de gaz ou de mélange de gaz FxGa est un flux d'aspiration auquel les boulettes, boudins et / ou palets B sont soumis au sein d'un transporteur pneumatique 29. Typiquement, un transporteur pneumatique 29 est un dispositif de convoyage qui utilise le déplacement d'un gaz Ga ou d'un mélange de gaz Ga, et en particulier d'air, à l'intérieur d'une canalisation pour le transport de produits pulvérulents ou granulaires sous un effet d'aspiration de ces derniers au sein de ladite canalisation. L'étape d'élimination de la farine d'enrobage F consiste donc, dans ce cas de figure particulièrement avantageux, à aspirer et transporter les boulettes, boudins et / ou palets B au sein d'un transporteur pneumatique 29, par l'intermédiaire donc d'une canalisation que comprend ce dernier. De manière surprenante, il s'avère qu'une telle manière de mettre en œuvre l'étape d'élimination de la farine d'enrobage F s'avère particulièrement efficace, dans la mesure où l'élimination de la farine d'enrobage F peut être avantageusement provoquée non seulement par le frottement du flux gazeux FxGa d'aspiration contre la surface extérieure des boulettes, boudins et / ou palets B, mais également par un frottement de ces derniers contre une paroi intérieure de la canalisation du transporteur pneumatique 29 et / ou par un frottement des boulettes, boudins et / ou palets B les uns contre les autres lors de leur déplacement au sein dudit transporteur pneumatique 29.

Outre les caractéristiques déjà évoquées du flux gazeux FxGa d'aspiration en termes de profil géométrique, de débit, de pression ou encore de vitesse, la longueur de transport des boulettes, boudins et / ou palets B au sein du transporteur pneumatique 29 peut également être régulée, choisie, selon les dimensions des boulettes, boudins et / ou palets B, leur quantité, ainsi que selon la quantité de farine d'enrobage F présente sur leur surface extérieure afin d'optimiser l'élimination de la farine d'enrobage F. En effet, l'allongement de la longueur de transport tend à augmenter la quantité de farine d'enrobage F éliminée. Le recours à un transporteur pneumatique 29 pour éliminer la farine d'enrobage F est particulièrement bien adapté à une mise en œuvre dans un contexte de fabrication industrielle, puisqu'il permet en outre de déplacer de manière rapide, sûre et hygiénique lesdits boulettes, boudins et / ou palets B d'un point à un autre de l'espace au sein duquel est fabriqué le produit alimentaire. Enfin, la farine d'enrobage F ainsi éliminée peut avantageusement rester confinée au sein du transporteur pneumatique, ce qui contribue à la propreté et à la sécurité (vis-à-vis notamment du risque d'explosion d'une atmosphère chargée en farine) du procédé, et être collectée par exemple afin d'être réutilisée pour l'étape de formage d'autres boulettes, boudins et / ou palets B. Bien évidemment, d'autres configuration de flux d'aspiration pourront être alternativement envisagées, et par exemple une configuration similaire - au sens du gazeux FxGa près - à celle envisagée ci-avant s'agissant de la mise en oeuvre d'un flux gazeux FxGa de soufflage. Néanmoins, la mise en œuvre d'un transporteur pneumatique 29, comme décrit ci-dessus, reste plus avantageuse, tant en termes d'efficacité d'élimination de la farine d'enrobage F qu'en termes de praticité de mise en œuvre, en particulier dans un environnement de fabrication industrielle.

Il a été observé que la température des boulettes, boudins et / ou palets B est un paramètre qui peut influer sur l'efficacité de l'élimination de la farine d'enrobage F par soumission à un flux gazeux FxGa. En particulier, l'élimination de la farine apparaît alors optimisée lorsque les boulettes, boudins et / ou palets B sont préférentiellement soumis au flux de gaz ou de mélange de gaz FxGa (flux de soufflage ou flux d'aspiration) alors que lesdits boulettes, boudins et / ou palets B sont à une température moyenne inférieure ou égale à 50 °C. Il est toutefois avantageux que la température des boulettes, boudins et / ou palets B ne soit pas trop faible, afin d'éviter un éventuel phénomène de condensation d'eau à la surface extérieure des boulettes, boudins et / ou palets B. Ainsi, de manière particulièrement préférentielle, lesdits boulettes, boudins et / ou palets B sont soumis audit flux de gaz ou de mélange de gaz FxGa alors qu'ils sont à une température moyenne sensiblement comprise entre 2 °C et 15 °C. En outre, le maintien des boulettes, boudins et / ou palets B à une température moyenne comprise dans les plages de valeurs préférentielles indiquées ci-dessus confère avantageusement auxdits boulettes, boudins et / ou palets B une rigidité suffisante pour éviter une déformation plastique de ces derniers sous les effets du flux gazeux FxGa. A ce titre, le procédé de fabrication peut avantageusement comprendre, entre l'étape de malaxage et de cuisson et l'étape d'élimination de la farine d'enrobage F, et de préférence plus précisément entre l'étape de formage des boulettes, boudins et / ou palets B et l'étape d'élimination de la farine d'enrobage F, une étape de refroidissement (forcé ou non) des boulettes, boudins et / ou palets B pour amener ces derniers à une température moyenne comprise dans les plages de températures préférentielles évoquées ci-dessus. La température dudit flux de gaz ou de mélange de gaz FxGa (flux de soufflage ou flux d'aspiration) peut être quant à elle avantageusement comprise entre 1 °C et 30°C, et de préférence comprise entre 2 °C et 20 °C.

Selon une deuxième variante, le fluide utilisé au cours de l'étape de d'élimination de la farine d'enrobage F peut être un liquide Li (flux liquide FxLi). Ledit liquide Li peut être formé d'un liquide unique ou d'un mélange de plusieurs liquides différents, le ou les liquides étant avantageusement alimentaire(s). De préférence, le liquide Li est de l'eau, afin notamment de faciliter la mise en œuvre du procédé et d'éviter notamment de modifier le goût des boulettes, boudins et / ou palets B de composition pâteuse C. Bien évidemment, mais de manière moins avantageuse, il pourrait toutefois alternativement s'agir d'un autre liquide ou mélange de liquides que de l'eau (une huile végétale, par exemple). Les caractéristiques du flux liquide FxLi, et de préférence d'eau, en termes de profil géométrique, de débit, de pression ou encore de vitesse, peuvent être avantageusement régulées, définies selon les dimensions des boulettes, boudins et / ou palets B, leur quantité, ainsi que selon la quantité de farine d'enrobage F présente sur leur surface extérieure. Selon cette deuxième variante, la farine d'enrobage F est avantageusement éliminée par frottement du flux liquide FxLi contre la surface extérieure des boulettes, boudins et / ou palets B, le flux liquide FxLi venant laver au moins partiellement ladite surface extérieure.

Selon un mode de réalisation préférentiel de cette deuxième variante, le flux de liquide FxLi est un flux de gouttelettes d'eau. En d'autres termes, il s'agit donc de soumettre lesdits boulettes, boudins et / ou palets B à un douchage par un ou plusieurs jets de gouttelettes d'eau projetées en direction de la surface extérieure des boulettes, boudins et / ou palets B, de préférence sous la forme d'un brouillard d'eau. Au cours de l'étape d'élimination de la farine d'enrobage, les boulettes, boudins et / ou palets B peuvent alors être déplacés, par exemple sur un convoyeur 31, tandis qu'ils sont soumis aux effets du flux liquide FxLi de gouttelettes d'eau, de préférence selon une direction de déplacement orthogonale à une direction de projection du flux liquide FxLi. De préférence, le convoyeur 31 est ajouré et les boulettes, boudins et / ou palets B sont soumis à des jets de gouttelettes d'eau de sens opposés, de manière à optimiser le traitement de la surface extérieure des boulettes, boudins et / ou palets B par les gouttelettes d'eau.

De manière préférentielle, ledit flux liquide FxLi est un flux de gouttelettes d'eau chaude, et / ou éventuellement de vapeur d'eau, c'est-à-dire d'eau à une température supérieure à la température ambiante de l'environnement de fabrication, typiquement comprise entre 15° C et 35 °C), pour optimiser encore l'efficacité de l'étape d'élimination de la farine d'enrobage F. Plus avantageusement encore, le flux de gouttelettes d'eau chaude est à une température sensiblement comprise entre 50 °C et 100 °C, de préférence comprise entre 60 °C et 99 °C (et par exemple compris entre 70 °C et 95 °C), les boulettes, boudins et / ou palets B étant soumis audit flux de gouttelettes d'eau chaude pendant un temps de traitement sensiblement compris entre 1 min et 10 min, de préférence compris entre 1 min et 8 min, et de préférence encore compris entre 2 min et 6 min. L'efficacité de l'étape d'élimination de la farine d'enrobage F dans de telles conditions de température et de temps de traitement semble s'expliquer, outre que par des phénomènes de frottement et de lavage tels que déjà évoqués ci-avant, par un phénomène de transformation physico-chimique de la farine d'enrobage F. En particulier, lorsque cette dernière contient de l'amidon, voire des protéines capables de former du gluten, la soumission des boulettes, boudins et / ou palets B à un tel flux de gouttelettes d'eau chaude est susceptible de provoquer une hydratation des grains de la farine d'enrobage F et une gélatinisation totale ou partielle de l'amidon et / du gluten, qui tend à faire éclater les grains de la farine d'enrobage F. Il en résulte une disparition de la farine d'enrobage F, en tant que telle, par transformation cette dernière. Eventuellement, les phénomènes de frottement, de lavage et transformation pouvant être simultanés, les grains de farine d'enrobage F ainsi transformée peuvent être détachés de la surface extérieure des boulettes, boudins et / ou palets B et emportés par le flux liquide FxLi.

De manière particulièrement préférentielle, comme dans l'exemple illustré à la figure 5 notamment, le flux liquide FxLi est un flux de gouttelettes d'eau chaude auquel lesdits boulettes, boudins et / ou palets B sont soumis au sein d'un tunnel de pasteurisation 32 (ou tunnel de débactérisation thermocontrôlée), et ce avantageusement dans les conditions préférentielles de températures et de temps de traitement évoquées ci-dessus. A l'aide d'un tel tunnel de pasteurisation 32, connu en tant que tel et comprenant typiquement des buses de projection de gouttelettes d'eau chaude, il est ainsi avantageusement possible, en une seule et même étape, d'éliminer de manière particulièrement efficace la farine d'enrobage F présente sur la surface extérieure des boulettes, boudins et / ou palets B, tout en réduisant simultanément une éventuelle charge microbiologique des boulettes, boudins et / ou palets B par débactérisation thermocontrôlée. Cela permet ainsi d'allonger la durée de conservation du produit alimentaire avant son réchauffage ou sa cuisson par le consommateur, en garantissant la qualité microbiologique du produit alimentaire, et ce en particulier dans le cas où les boulettes, boudins et / ou palets B contiennent une farce G, comme envisagé précédemment.

Il a été par ailleurs observé que la température des boulettes, boudins et / ou palets B est un paramètre qui peut influer sur l'efficacité de l'élimination de la farine d'enrobage F par soumission à un flux liquide. En particulier, l'élimination de la farine d'enrobage F apparaît optimisée lorsque les boulettes, boudins et / ou palets B sont préférentiellement soumis audit flux de liquide FxLi alors qu'ils sont à une température moyenne supérieure à la température ambiante (de l'environnement de fabrication, typiquement comprise entre 15° C et 35 °C), de préférence comprise entre 30 °C et 95 °C. Par exemple, lorsque les boulettes, boudins et / ou palets B sont de constitution homogène, c'est-à-dire uniquement constitués de composition pâteuse C, les boulettes, boudins et / ou palets B peuvent être avantageusement soumis audit flux de liquide FxLi alors qu'ils sont à une température moyenne supérieure entre 60 °C et 95 °C. Lorsque les boulettes, boudins et / ou palets B sont de constitution hétérogène, et par exemple fourrés d'une farce G, les boulettes, boudins et / ou palets B peuvent être avantageusement soumis audit flux de liquide FxLi alors qu'ils sont à une température moyenne comprise entre 30 °C et 60 °C.

Une telle étape d'élimination de la farine d'enrobage F par soumission des boulettes, boudins et / ou palets B à un flux liquide FxLi pourrait bien évidemment, quoique de manière moins avantageuse, être réalisée d'une manière différente de celle exposée ci-dessus. Ceci étant, il n'en reste pas moins préférable (bien qu'envisageable) que la soumission des boulettes, boudins et / ou palets B à un flux liquide FxLi ne consiste pas en une immersion complète (et à plus forte raison, prolongée) des boulettes, boudins *et* / *ou* palets B dans un bain de liquide, afin d'éviter que les boulettes, boudins et / ou palets B se gorgent de liquide et gonflent, ce qui pourraient s'avérer préjudiciable pour les qualités organoleptiques finales du produit alimentaire.

Il est à noter en outre que le recours à un flux liquide FxLi contribue par ailleurs à la propreté et à la sécurité (vis-à-vis notamment du risque d'explosion d'une atmosphère chargée en farine) du procédé, dans la mesure où on évite ainsi une dispersion de farine d'enrobage F pulvérulente dans l'environnement de production. Par ailleurs, les variantes « par flux gazeux » FxGa et « par flux liquide » FxLi décrites ci-avant ne sont pas nécessairement exclusives l'une de l'autre, dans la mesure où l'étape d'élimination de tout ou partie de la farine d'enrobage F pourrait avantageusement comprendre au moins une première opération de soumission des boulettes, boudins et / ou palets B à au moins un flux d'un premier fluide, par exemple gazeux, et une deuxième opération de soumission des boulettes, boudins et / ou palets B à au moins un flux d'un deuxième fluide, différents dudit premier fluide et par exemple liquide. Les avantages des deux variantes pourraient ainsi être avantageusement combinés, et l'élimination de la farine d'enrobage F être encore améliorée. Par exemple, il est envisageable que l'étape d'élimination de la farine d'enrobage F puisse être ainsi réalisée :
- soit dans un premier temps par soumission des boulettes, boudins et / ou palets B à un premier flux gazeux FxGa (par exemple au sein d'un transporteur pneumatique 29), puis dans un deuxième temps par soumission des boulettes, boudins et / ou palets B à un deuxième flux liquide FxLi (par exemple, dans un tunnel de pasteurisation 32) ;
- soit inversement dans un premier temps par soumission des boulettes, boudins et / ou palets B à un premier flux liquide FxLi (par exemple, dans un tunnel de pasteurisation 32), puis dans un deuxième temps par soumission des boulettes, boudins et / ou palets B à un deuxième flux gazeux FxGa (par exemple au sein d'un transporteur pneumatique 29).

Par ailleurs, si le recours à un flux de fluide, gazeux FxGa ou liquide FxLi, s'avère particulièrement efficace pour éliminer la farine d'enrobage F présente à la surface extérieure des boulettes, boudins et / ou palets B, il reste pour autant parfaitement envisageable que l'étape d'élimination de la farine d'enrobage F comprenne, de manière complémentaire, une ou plusieurs opération(s) de passage des boulettes, boudins et / ou palets B sur un ou plusieurs moyens vibrants 33 (tel que par exemple, un crible vibrant, un tapis ou une bande de transport vibrant(e), etc.).

Afin de garantir une conservation optimale du produit alimentaire sur de longues périodes, en particulier lorsque les boulettes, boudins et / ou palets B n'ont pas subi de débactérisation thermocontrôlée comme évoquée ci-avant, le procédé de fabrication du produit alimentaire peut avantageusement comprendre, de préférence postérieurement à l'étape d'élimination de la farine d'enrobage F :
- une étape de séchage des boulettes, boudins et / ou palets B, de préférence en continu, pour porter l'humidité relative de ces derniers à une valeur préférentiellement comprise entre une humidité relative sensiblement comprise entre 40 % et 60 % environ, de préférence comprise entre 45 % et 55 % environ. Une telle étape de séchage peut être avantageusement réalisée par soumission des boulettes, boudins et / ou palets B à un flux forcé d'air chaud ; et / ou
- une étape de refroidissement des boulettes, boudins et / ou palets B, de préférence en continu, pour porter ces derniers à une température moyenne sensiblement comprise entre 2 °C et 15 °C.

De préférence, le procédé de fabrication comprend, après l'étape de formage, une opération de calibrage des boulettes, boudins et / ou palets B, par exemple à l'aide d'une plaque vibrante pourvue de trous de dimensions variables selon une direction de déplacement des boulettes, boudins et / ou palets B le long de ladite plaque. En tant que telle, l'opération de calibrage n'appartient pas à l'étape d'élimination de la farine d'enrobage F, dans la mesure où sa mise en oeuvre n'a qu'un impact très limité, sinon nul, sur la farine d'enrobage F présente sur la surface extérieure des boulettes, boudins et / ou palets B. Avantageusement, le procédé de fabrication du produit alimentaire comprend, postérieurement à l'étape d'élimination de la farine d'enrobage F et, le cas échéant, postérieurement à ladite étape de séchage et / ou à ladite étape de refroidissement des boulettes, boudins et / ou palets B, une étape de conditionnement du produit alimentaire sous la forme d'une quantité choisie de boulettes, boudins et / ou palets B. Le produit alimentaire peut être ainsi conditionné en sachet ou en barquette par exemple, et de préférence sous atmosphère contrôlée ou modifiée (par exemple sous une atmosphère par un mélange de 30 % à 70 % de dioxyde de carbone CO₂ et de 30 % à 70 % de diazote N₂).

Une installation de fabrication d'un produit alimentaire sous forme de boulettes, boudins et / ou palets B, destiné à être réchauffé ou cuit avant d'être consommé, tel que celui-ci a été défini ci-avant en lien avec la description du procédé selon l'invention est décrite comme suit. D'une manière générale, il s'agit avantageusement d'une installation permettant de mettre en œuvre le procédé de fabrication conforme à l'invention. Ladite installation est préférentiellement conçue et configurée pour permettre une fabrication du produit alimentaire en continu. Il s'agit avantageusement d'une installation industrielle, au moins partiellement automatisée. Différents exemples de réalisation de l'installation, et de certains détails préférentiels de sa conception, sont illustrés de manière schématique aux figures 1 à 8.

L'installation comprend un poste de malaxage et de cuisson simultanés 1 d'un mélange formé à partir au moins d'une farine et / ou d'une semoule d'au moins une céréale contenant des protéines capables de former du gluten, d'un produit de tubercule de *Solanum tuberosum* et d'un liquide d'hydratation, pour obtenir une composition pâteuse C. Le poste de malaxage et de cuisson simultanés 1 est avantageusement conçu et configuré pour permettre la mise en œuvre de l'étape de malaxage et de cuisson simultanés du procédé de fabrication conforme à l'invention. Plus précisément, il s'agit d'un poste de malaxage et de cuisson simultanés 1 pour malaxer et cuire ledit mélange
- pendant un temps de malaxage-cuisson compris entre 1 min et 15 min, de préférence compris entre 1 min et 10 min, de préférence compris entre 1 min et 8 min, et de préférence compris entre 1 min et 5 min, de préférence encore compris entre 2 min et 5 min, et
- de manière obtenir, à l'issue du malaxage et de la cuisson simultanés, une composition pâteuse C présentant une température moyenne comprise entre 80 °C et 100 °C.

En d'autres termes, ledit poste de malaxage et de cuisson simultanés 1 est spécifiquement conçu, configuré et paramétré pour malaxer et cuire le mélange pendant le temps de malaxage-cuisson susvisé, et de telle sorte qu'une fois le temps de malaxage-cuisson, la température moyenne de la composition pâteuse sortant du poste de malaxage et de cuisson est comprise dans la plage de valeur susvisée. A ce titre, le poste de malaxage et de cuisson simultanés 1 est avantageusement conçu, configuré et paramétré pour porter le mélange, pendant ledit temps de malaxage-cuisson, à une température moyenne de malaxage-cuisson avantageusement comprise entre 50 °C et 100 °C, et de préférence comprise entre 70 °C et 100 °C (étant entendu qu'un gradient de température peut être observé au fil du temps de malaxage-cuisson et / ou au sein de la masse du mélange, et que la température peut très localement excéder 100 °C, en particulier au voisinage immédiat de la paroi intérieure 5 de la chambre interne 4 du malaxeur-cuiseur 2 qui sera décrit plus loin). Pour les avantages déjà présentés en lien avec le procédé de fabrication, il est plus particulièrement avantageux que le poste de malaxage et de cuisson simultanés 1 soit conçu et configuré pour que la température moyenne de la composition pâteuse C à l'issue du malaxage et de la cuisson simultanés soit d'une part strictement supérieure à 90 °C et d'autre part inférieure ou égale à 100 °C, et de préférence encore égale à 98 °C.

De préférence, le poste de malaxage et de cuisson simultanés 1 comprend au moins un malaxeur-cuiseur 2, avantageusement conforme à la description qui en a déjà été faite ci-avant en lien avec le procédé de fabrication. Comme illustré en exemple aux figures 1 et 4 à 8 (dans lesquelles le malaxeur-cuiseur 2 est illustré de manière schématique en coupe latérale longitudinale), le malaxeur-cuiseur 2 comprend un réceptacle 3 définissant une chambre interne 4 pourvue d'une paroi intérieure 5, un arbre 6 monté à rotation au sein de la chambre interne 4 et pourvu de moyens de malaxage 7, et un moyen de chauffage 8 de la paroi intérieure 5. Typiquement de forme cylindrique à base circulaire, la chambre interne 4 s'étend avantageusement, selon une direction d'extension longitudinale moyenne X-X', entre une première extrémité 9A au niveau de laquelle peuvent être agencés un ou plusieurs dispositifs d'introduction 10 des ingrédients de base et du liquide d'hydratation au sein de la chambre interne 4, et une deuxième extrémité 9B opposée, au niveau de laquelle la chambre interne 4 est avantageusement pourvue d'une ouverture de sortie 11 de la composition pâteuse C. L'arbre 6 est avantageusement monté à rotation au sein de la chambre interne 4 selon un axe de rotation Y-Y' sensiblement parallèle à la direction d'extension longitudinale moyenne X-X' de la chambre interne 4, et les moyens de malaxage 7 sont avantageusement conformés et configurés, dans leur ensemble, pour entraîner une progression (générale) du mélange au sein de la chambre interne 4 en direction de la deuxième extrémité 9B de cette dernière (comme indiqué par la flèche 12 à la figure 1 notamment). Le temps de malaxage-cuisson correspond donc alors avantageusement au temps de séjour du mélange au sein du malaxeur-cuiseur 2, et la température moyenne de la composition pâteuse C est avantageusement mesurée en sortie du malaxeur-cuiseur 2, en aval donc de l'ouverture de sortie 11 de ce dernier.

Le ou les dispositifs d'introduction 10 peuvent être conçus et configurés pour introduire les ingrédients de base et le liquide d'hydratation au sein de la chambre interne 4 du malaxeur-cuiseur 2 de manière séparée, ou éventuellement déjà mélangés entre eux pour certains au moins. Avantageusement, le poste de malaxage et de cuisson simultanés 1 comprend, agencés en amont du ou des dispositifs d'introduction 10 des ingrédients et du liquide d'hydratation au sein de la chambre interne 4, un ou plusieurs dispositifs de dosage 13 des ingrédients de base et du liquide. Le ou les dispositifs de dosage 13 et le ou les dispositifs d'introduction 10 des ingrédients et du liquide d'hydratation peuvent être de tous types connus adaptés à la nature de ces derniers.

De préférence, le moyen de chauffage 8 de la paroi intérieure 5 est conçu et configuré pour porter cette dernière à une température préférentiellement comprise entre 100 °C et 160 °C. Avantageusement, le moyen de chauffage 8 de la paroi intérieure 5 de la chambre interne 4 comprend une enveloppe (ou chemise) de chauffe 14, qui entoure la chambre interne 4 (de préférence sur sensiblement toute la longueur et toute la circonférence de cette dernière) et à l'intérieur de laquelle circule un fluide caloporteur (eau chaude, vapeur d'eau, huile diathermique, etc.). De préférence, ledit fluide caloporteur est à une température préférentiellement comprise entre 100 °C et 160 °C, et de préférence encore comprise entre 120 °C et 150 °C.

De manière préférentielle, il s'agit d'un malaxeur-cuiseur 2 conçu et configuré pour malaxer et cuire en continu ledit mélange en son sein. Plus préférentiellement encore, le malaxeur-cuiseur 2 est avantageusement dimensionné pour malaxer et cuire en continu ledit mélange avec un débit massique de composition pâteuse C qui est avantageusement compris entre 200 et 2 200 kilogrammes par heure (kg / h). A ce titre, le malaxeur-cuiseur 2 présente typiquement une longueur de chambre interne 4 comprise entre 1 300 mm et 2 600 mm pour un diamètre interne compris entre 180 mm et 400 mm, ce qui permet une production du produit alimentaire à une cadence particulièrement élevée. Ainsi, le malaxeur-cuiseur 2 est alimenté en continu en entrée en ingrédients de base et en liquide d'hydratation, par le ou les des dispositifs d'introduction 10 des ingrédients et du liquide d'hydratation, et produit en continu en sortie la composition pâteuse C (bien que pas nécessairement sous la forme d'un flux ininterrompu, parfaitement continu, de composition pâteuse C).

Les moyens de malaxage 7 du malaxeur-cuiseur 2 sont préférentiellement formés de pales 15, 15A, 15B (ou palettes), de préférence distinctes et distantes les unes des autres, qui s'étendent chacune à partir de l'arbre 6 de manière sensiblement radiale à l'axe de rotation Y-Y' de ce dernier. Avantageusement distribuées en spirale autour dudit axe de rotation Y-Y', les pales 15, 15A, 15B, ne forment donc pas, de préférence, un moyen de malaxage monolithique de type vis sans fin par exemple. L'arbre 6 est typiquement commandé à rotation par un moteur électrique 16 (ou tout autre actionneur adéquat). Avantageusement, le poste de malaxage et de cuisson simultanés 1 est conçu et configuré pour commander l'arbre 6 à rotation à une vitesse suffisante pour provoquer une centrifugation du mélange et la formation, contre la paroi intérieure 5 chauffée de la chambre interne 4, d'une couche dudit mélange. Ladite couche peut alors ainsi avantageusement former contre la paroi intérieure 5 et suivant la direction d'extension longitudinale X-X' de la chambre interne 4, une couche mince, continue et turbulente dudit mélange. De préférence, le poste de malaxage et de cuisson simultanés 1 est conçu et configuré de sorte que la couche de mélange présente une épaisseur e moyenne comprise entre 1 mm et 40 mm, et plus préférentiellement comprise entre 2 mm et 30 mm (figure 1 notamment). Par exemple, le malaxeur-cuiseur 2 peut être conçu et configuré, notamment en termes de choix et de dimensionnement du moteur 16, pour mettre l'arbre 6 en rotation à une vitesse avantageusement comprise entre 500 tr / min et 1 000 tr / min (tours par minute), pour un diamètre interne de la chambre interne 4 typiquement compris entre 180 mm et 400 mm. Avantageusement, chacune des pales 15, 15A, 15B présente une extrémité distale 17, opposée à une extrémité proximale au niveau de laquelle chacune des pales 15, 15A, 15B est fixée à l'arbre 6, et qui est agencée à distance de la paroi intérieure 5 de la chambre interne 4, et de préférence à une distance d sensiblement comprise entre 1 mm et 10 mm, par exemple entre 2 mm et 5 mm (figure 1 notamment). Comme expliqué ci-avant en lien avec le procédé de fabrication, lorsque le mélange forme une couche plaquée contre la paroi intérieure 5 de la chambre interne 4, les pales 15, 15A, 15B ne pénètrent donc avantageusement que partiellement dans l'épaisseur de ladite couche.

De manière préférentielle, l'orientation angulaire des pales 15, 15A, 15B du malaxeur-cuiseur 2 est variable le long de l'axe de rotation Y-Y' de l'arbre 6. Plus spécifiquement, comme illustré schématiquement en exemple à la figure 1, le malaxeur-cuiseur 2 comprend avantageusement au moins :
- une première portion de travail 18A, qui s'étend axialement entre les première et deuxième extrémités 9A, 9B de la chambre interne 4 et dans laquelle les pales 15A présentent une première orientation angulaire relativement à l'axe de rotation Y-Y' de l'arbre 6, pour entraîner une progression axiale du mélange au sein de la première portion de travail 18A à une première vitesse, et
- une deuxième portion de travail 18B, qui prolonge axialement (c'est-à-dire suivant l'axe de rotation Y-Y') la première portion de travail 18A en direction de la deuxième extrémité 9B de la chambre interne 4 et dans laquelle les pales 15B présentent une deuxième orientation angulaire différente de ladite première orientation angulaire, pour entraîner une progression axiale du mélange au sein de la deuxième portion de travail 18B à une deuxième vitesse, inférieure (strictement) à ladite première vitesse.

Dans la première portion de travail 18A, chaque pale 15A présente un (premier) pas θ1 tel que, pour un sens de rotation R prédéfini de l'arbre 6, chaque pâle 15A génère un effort de poussée du mélange en direction de la deuxième extrémité 9B de la chambre interne 4 (par convention, on choisira de qualifier de « positif » un tel pas de poussée). A la figure 2, une vue schématique tronquée de la première portion de travail 18A est ainsi illustrée en exemple. La flèche 21 indique l'orientation de cet effort de poussée en relation avec le sens de progression général - illustré par la flèche 12 - du mélange au sein de la chambre interne 4. Avantageusement, ledit (premier) pas θ1 est compris entre + 0° et + 45°, et de préférence encore compris entre + 5° et + 30°, et par exemple égal à + 10° pour obtenir un bon compromis entre l'effort de malaxage exercé par les pales 15A et la première vitesse de progression du mélange à travers la première portion de travail 18A, en s'assurant que la totalité du mélange présent est bien déplacé, raclé, par les pales 15A. Dans la deuxième portion de travail 18B, chaque pale 15B présente un (deuxième) pas θ2 tel que, pour ledit sens de rotation R prédéfini de l'arbre 6, chaque pâle 15B génère un effort de poussée moindre du mélange en direction de la deuxième extrémité 9B de la chambre interne 4, ou un effort de poussée du mélange en direction de la première extrémité 9A de la chambre interne 4, de sorte à ralentir la progression du mélange (deuxième vitesse de progression inférieure la première vitesse de progression). Comme déjà explique ci-avant en lien avec le procédé de fabrication, l'orientation angulaire différente des pales 15B dans la deuxième portion de travail 18B, et la différence de vitesse qui en découle, tendent ainsi avantageusement à créer un phénomène de freinage, de rétention du mélange, à l'intérieur de la chambre interne 4.

Si le deuxième pas θ2 des pales 15B de la deuxième portion de travail 18B peut être « positif », et par exemple compris entre + 5° et + 30°, il est plus avantageux encore que le deuxième pas θ2 soit « négatif », c'est-à-dire que la deuxième orientation angulaire des pales 15B de la deuxième portion de travail 18B soit inversée, opposée (figure 3), par rapport à la première orientation angulaire des pales 15A de la première portion de travail 18A (figure 2). Chaque pâle 15B de la deuxième portion de travail 18B génère, prise en tant que telle, un effort de poussée du mélange en direction de la première extrémité 9A de la chambre interne 4. Il en résulte ainsi un phénomène de « contre-poussée » du mélange. Le deuxième pas θ2 peut alors être avantageusement compris entre - 5° et - 30°, et par exemple égal à - 10°. A la figure 3, une vue schématique tronquée de la deuxième portion de travail 18B est ainsi illustrée en exemple. La flèche 22 indique l'orientation de cet effort de contre-poussée en relation avec le sens de progression général - illustré par la flèche 12 - du mélange au sein de la chambre interne 4.

De préférence, la longueur L2 de la deuxième portion de travail 18B, considérée suivant l'axe de rotation Y-Y' de l'arbre 6, est inférieure ou sensiblement égale à la longueur L1 respective de la première portion de travail 18A (comme illustré en exemple à la figure 1), notamment de manière à limiter toutefois un risque de dégradation du mélange sous l'effort de malaxage et sous l'effet de l'apport de chaleur par le moyen de chauffage 8 de la paroi intérieure 5. Plus préférentiellement encore, les longueurs L1, L2 des première et deuxième portions de travail 18A, 18B peuvent être choisies telles que le rapport L1 / L2 de la longueur L1 de la première portion de travail 18A sur la longueur L2 de la deuxième portion de travail 18B est sensiblement compris entre 1 et 4.

Avantageusement, le malaxeur-cuiseur 2 comprendre davantage encore de portions de travail successives, et en particulier au moins une troisième portion de travail (non illustrée), qui prolonge axialement la deuxième portion de travail 18B en direction de la deuxième extrémité 9B de la chambre interne 4 et dans laquelle les pales 15 présentent une troisième orientation angulaire différente de ladite deuxième orientation angulaire, pour entraîner une progression axiale du mélange au sein de la troisième portion de travail à une troisième vitesse, supérieure à ladite deuxième vitesse. De préférence, la troisième orientation angulaire est inversée par rapport à la deuxième orientation angulaire. Comme déjà précisé en lien avec le procédé de fabrication, les portions de travail 18A, 18B dont il est question ci-dessus sont avantageusement des portions (ou portions de malaxage-cuisson) de la chambre interne 4 dans lesquels le mélange peut effectivement être malaxé et cuit simultanément.

Avantageusement, ledit poste de malaxage et de cuisson simultanés 1 inclut une pluralité de tels malaxeurs-cuiseurs 2, qui sont alors avantageusement agencés en parallèle, afin d'atteindre une cadence plus élevée de préparation de la composition pâteuse C sans pour autant dégrader la qualité du malaxage et de la cuisson du mélange (aux figures, un seul malaxeur-cuiseur 2 est illustré afin uniquement de ne pas surcharger visuellement les illustrations schématiques proposées).

Un tel malaxeur-cuiseur 2 permet avantageusement, avec un encombrement relativement réduit, l'obtention rapide et en continu d'une composition pâteuse C particulièrement bien homogène et au moins partiellement cuite. Cela permet d'obtenir avantageusement, à partir d'une telle composition pâteuse C, un produit alimentaire qui présente une texture homogène et régulière, et qui pourra être facilement et rapidement réchauffé ou cuit (en cas typiquement de cuisson partielle du mélange) en vue de sa consommation. Bien évidemment, un poste de malaxage et de cuisson simultanés 1 de conception et configuration différentes pourra toutefois être alternativement envisagé.

L'installation comprend également un poste de formage 23 de boulettes, boudins et / ou palets B, à partir de la composition pâteuse C obtenue à l'aide dudit poste de malaxage et de cuisson simultanés 1. Ledit poste de formage 23 est avantageusement conçu et configuré pour mettre en œuvre l'étape de formage précédemment décrite du procédé de fabrication conforme à l'invention. Agencé en aval du poste de malaxage et de cuisson simultanés 1, le poste de formage 23 comprend typiquement un ou plusieurs dispositifs de formage 24A, de tous types connus et adaptés à l'obtention, à partir de la composition pâteuse C, de boulettes, boudins et / ou palets B de formes et dimensions choisies. Par exemple, le ou les dispositifs de formage 24A peuvent être conçus et configurés pour extruder la composition pâteuse C sous la forme d'un cylindre continu de composition pâteuse C d'un diamètre choisi, découper ledit cylindre de composition pâteuse C en tronçons de longueur choisie, puis éventuellement mouler les tronçons de composition pâteuse C ainsi obtenus pour leur conférer une forme finale prédéfinie de boulettes, boudins et / ou palets B. Par exemple, le dispositif de formage 24A peut comprendre des rouleaux sur lesquels la composition pâteuse C est écrasée, et des buses à travers lesquelles la composition pâteuse est ensuite poussée, extrudée. Agencés en sortie des buses, des couteaux rotatifs peuvent être prévus pour découper la composition pâteuse C en boulettes B et pour rabattre ces dernières sur un rouleau strié ou une grille à barreaux parallèles, afin de marquer les boulettes B de stries décoratives.

De manière optionnelle, et comme illustré en exemple à la figure 6 ledit poste de formage 23 des boulettes, boudins et / ou palets B comprend un dispositif d'association 24B de la composition pâteuse C avec une farce G (ou garniture), de manière à former ainsi des boulettes, boudins et / ou palets B farcis (ou fourrés), comme expliqué précédemment en lien avec le procédé conforme à l'invention. De préférence, le dispositif d'association 24B est conçu et configuré pour associer de la composition pâteuse C et la farce G par co-extrusion de ces dernières. Dans ce cas, le dispositif d'association 24B est avantageusement confondu avec, ou intégré dans, le ou les dispositifs de formage 24A, et peut par exemple comprendre une série de buses primaires, à travers lesquelles la composition pâteuse C est poussée en sortie d'un réservoir 25 de composition pâteuse C, et une série de buses secondaires, chacune agencée centrée à l'intérieur d'une buse primaire et alimentée en farce G à partir, par exemple, d'un réservoir 26 de farce F. Un diaphragme, dont l'ouverture et la fermeture sont commandées à une cadence prédéfinie, peut être avantageusement prévu pour couper et refermer un tube de composition pâteuse pourvu d'un cœur de farce G sortant des buses, pour former ainsi des boulettes, boudins et / ou palets B farcis.

De préférence, l'installation est conçue et configurée de sorte que le formage des boulettes, boudins et / ou palets B est réalisé par ledit poste de formage 23 alors que la température de la composition pâteuse C est encore sensiblement comprise entre 50 °C et 100 °C, et de préférence comprise entre 80 °C et 95 °C. Ainsi, le poste de formage 23 est donc prévu pour former lesdits boulettes, boudins et / ou palets B à chaud, ce qui permet notamment de faciliter la mise en forme de la composition pâteuse C. Avantageusement, le poste de formage 23 est alors agencé immédiatement en aval du poste de malaxage et de cuisson simultanés 1, de sorte qu'il n'est ainsi pas nécessaire de recourir à un quelconque moyen de réchauffage de la composition pâteuse C en amont du poste de formage 23. Par exemple, le poste de formage 23 peut être agencé directement en dessous du poste de malaxage et de cuisson simultanés 1, par exemple en-dessous de l'ouverture de sortie 11 du malaxeur-cuiseur 2, de sorte que la composition pâteuse C sortant de ce dernier chute directement et immédiatement, sous l'effet de la gravité, dans le poste de formage 23. Alternativement, l'installation peut comprendre un convoyeur pour collecter la composition pâteuse C sortant du poste de malaxage et de cuisson simultanés 1, par exemple par l'ouverture de sortie 11 du malaxeur-cuiseur 2, et l'amener directement au poste de formage 23.

De préférence, le poste de formage 23 comprend un dispositif de recouvrement 27 d'au moins une partie d'une surface extérieure des boulettes, boudins et / ou palets B par une farine d'enrobage F. Ledit dispositif de recouvrement 27 est avantageusement conçu et configuré pour mettre en œuvre l'opération de recouvrement d'au moins une partie de la surface extérieure des boulettes, boudins et / ou palets B par une farine d'enrobage F précédemment décrite du procédé de fabrication conforme à l'invention. Typiquement, le dispositif de recouvrement 21 comprend un réservoir 28 de farine d'enrobage F, et il est conçu et configuré par exemple pour saupoudrer de farine d'enrobage F, de préférence en continu, la surface extérieure des boulettes, boudins et / ou palets B en cours de formage, ainsi que préférentiellement tout ou partie des surfaces du ou des dispositifs de formage 24A et / ou du dispositif d'association 24B en contact avec la composition pâteuse C des boulettes, boudins et / ou palets B.

En outre, l'installation de fabrication comprend de préférence, pour les raisons et avantages précédemment exposés en lien avec le procédé selon l'invention, un système d'élimination de tout ou partie (et de préférence d'au moins 50 % en masse) de la farine d'enrobage F présente sur la surface extérieure des boulettes, boudins et / ou palets B. Agencé en aval du poste de formage 23, le système d'élimination est avantageusement conçu et configuré pour mettre en œuvre l'étape d'élimination la farine d'enrobage F, telle que décrite ci-avant, en lien avec le procédé selon l'invention. Pour les effets et avantages techniques déjà explicités précédemment s'agissant dudit procédé, ledit système d'élimination de la farine d'enrobage F est préférentiellement conçu et configuré pour éliminer la farine d'enrobage F par soumission des boulettes, boudins et / ou palets B à au moins un flux d'au moins un fluide Ga, Li. Bien évidemment, l'installation n'est pas limitée à de telles conception et configuration préférentielles particulières du système d'élimination de la farine d'enrobage F. Les variantes décrites ci-après de ces conception et configuration préférentielles du système d'élimination de la farine d'enrobage F sont avantageusement respectivement destinées à la mise en œuvre des variantes correspondantes, exposées ci-avant, de l'étape d'élimination de la farine d'enrobage F que comprend de préférence le procédé de fabrication du produit alimentaire. Ainsi, le système d'élimination de la farine d'enrobage F pourra avantageusement comprendre tout ou partie des différents moyens techniques (ainsi que leurs effets et avantages respectifs) décrits en lien l'étape d'élimination de la farine d'enrobage F et ses variantes. Pour des raisons de concision, ces moyens, effets et avantages techniques ne seront donc pas nécessairement décrits à nouveau dans ce qui suit.

Selon une première variante, le système d'élimination de la farine d'enrobage F est avantageusement conçu et configuré pour soumettre les boulettes, boudins et / ou palets F à au moins un flux Fx d'au moins un fluide Ga, Li qui est un gaz Ga ou mélange de gaz Ga (flux gazeux FxGa), et de préférence de l'air. Selon un mode de réalisation (non illustré) de cette première variante, le flux gazeux FxGa est un flux de soufflage, le flux gazeux FxGa étant dirigé en direction des boulettes, boudins et / ou palets B. Le système d'élimination de la farine d'enrobage F peut alors avantageusement comprendre, outre des buses de soufflage dudit flux gazeux FxGa en direction des boulettes, boudins et / ou palets B, un convoyeur (ou tout autre moyen connu adéquat) pour déplacer les boulettes, boudins et / ou palets B tandis qu'ils sont soumis aux effets dudit flux de soufflage, de préférence selon une direction de déplacement orthogonale à une direction de soufflage dudit flux de soufflage. Selon un autre mode de réalisation plus préférentiel de cette première variante, retenue dans l'exemple de la figure 4, le flux de gaz ou de mélange de gaz FxGa est un flux d'aspiration. De manière particulièrement préférentielle, comme dans les exemples illustrés aux figures 4 et 7, le système d'élimination de la farine d'enrobage F comprend à ce titre un transporteur pneumatique 29, conforme à la description qui en a été faite ci-avant s'agissant du procédé, pour soumettre au sein dudit transporteur pneumatique 29, les boulettes, boudins et / ou palets B audit flux d'aspiration. Bien évidemment, mais néanmoins de manière moins avantageuse, d'autres moyens techniques connus adéquats pourront être envisagés pour soumettre les boulettes, boudins et / ou palets B à un flux gazeux de type flux d'aspiration.

De préférence, l'installation de fabrication du produit alimentaire est conçue et configurée de manière que ledit système d'élimination de la farine d'enrobage F soumette lesdits boulettes, boudins et / ou palets B audit flux de gaz ou de mélange de gaz FxGa alors que les boulettes, boudins et / ou palets B sont à une température moyenne inférieure ou égale à 50 °C, et de préférence sensiblement comprise entre 2 °C et 15 °C, pour les différents avantages déjà exposés en matière d'efficacité de l'élimination de la farine d'enrobage F. A ce titre, l'installation de fabrication peut avantageusement comprendre, entre le poste de malaxage et de cuisson simultanés 1 et le système d'élimination de la farine d'enrobage F, et de préférence plus précisément entre le poste de formage 23 des boulettes, boudins et / ou palets B et le système d'élimination de la farine d'enrobage F, un (premier) poste de refroidissement 30 (forcé ou non) des boulettes, boudins et / ou palets B pour amener ces derniers à une température moyenne comprise dans les plages de températures préférentielles évoquées ci-dessus (figures 4 et 7). De préférence, le système d'élimination est conçu et configuré de sorte que la température du flux de gaz ou de mélange de gaz FxGa (flux de soufflage ou flux d'aspiration) est quant à elle avantageusement comprise entre 1 °C et 30°C, et de préférence comprise entre 2 °C et 20 °C. De tout type connu adéquat, ledit poste de refroidissement 30 (ou refroidisseur) peut, par exemple, être avantageusement conçu et configuré pour soumettre, de préférence en continu, les boulettes, boudins et / ou palets B à un flux forcé d'air froid. Alternativement, mais de manière moins avantageuse, le poste de refroidissement 30 pourrait consister par exemple en un dispositif de stockage temporaire des boulettes, boudins et / ou palets B à température ambiante, dans le cas où la température moyenne recherchée reste supérieure ou égale à la température ambiante.

Selon une deuxième variante, le système d'élimination de la farine d'enrobage F est avantageusement conçu et configuré pour soumettre les boulettes, boudins et / ou palets B à au moins un flux d'au moins un fluide Ga, Li qui est un liquide Li (flux liquide FxLi). Ledit liquide Li peut être formé d'un liquide unique ou d'un mélange de plusieurs liquides différents, le ou les liquides étant avantageusement alimentaire(s). De préférence, ledit liquide Li est de l'eau.

Selon un mode de réalisation préférentiel de cette deuxième variante, ledit flux de liquide FxLi est un flux de gouttelettes d'eau. Le système d'élimination est alors conçu et configuré pour soumettre lesdits boulettes, boudins et / ou palets B à un douchage par un ou plusieurs jets de gouttelettes d'eau projetées en direction de la surface extérieure des boulettes, boudins et / ou palets B, de préférence sous la forme d'un brouillard d'eau (figures 5 et 8 notamment). Le système d'élimination peut avantageusement comprendre une ou plusieurs buses de projection de gouttelettes d'eau, ainsi qu'un convoyeur 31 (ou tout autre moyen technique connu adéquat) pour déplacer les boulettes, boudins et / ou palets B en regard des buses de projection, de préférence selon une direction de déplacement orthogonale à une direction de projection dudit flux liquide par lesdites buses de projection. De préférence, un tel convoyeur 31 sera alors ajouré, et au moins deux buses de projections seront agencées respectivement de part et d'autre de ce dernier afin de soumettre les boulettes, boudins et / ou palets à des jets de gouttelettes d'eau de sens opposés (figures 5 et 8 notamment). De manière préférentielle, le système d'élimination est alors conçu et configuré de sorte que ledit flux liquide FxLi est un flux de gouttelettes d'eau chaude, et / ou éventuellement de vapeur d'eau, c'est-à-dire d'eau à une température supérieure à la température ambiante de l'environnement de fabrication, typiquement comprise entre 15° C et 35 °C. Plus avantageusement encore, le système d'élimination est conçu et configuré de sorte que ledit flux de gouttelettes d'eau chaude est à une température sensiblement comprise entre 50 °C et 100 °C, de préférence entre 60 °C et 99 °C (par exemple comprise entre 70 °C et 95 °C), et de manière que lesdits boulettes, boudins et / ou palets B soient soumis audit flux de gouttelettes d'eau chaude pendant un temps de traitement sensiblement entre 1 min et 10 min, de préférence compris entre 1 min et 8 min, et de préférence encore compris entre 2 min et 6 min.

De manière particulièrement préférentielle, comme dans les exemples illustrés aux figure 5 à 8, le système d'élimination de la farine d'enrobage F comprend un tunnel de pasteurisation 32 pour soumettre au sein de ce dernier lesdits boulettes, boudins et / ou palets audit flux de gouttelettes d'eau chaude, et ce avantageusement dans les conditions préférentielles de températures et de temps de traitement évoquées ci-dessus. Connu en tant que tel, un tel tunnel de pasteurisation 32 comprend typiquement des buses de projection de gouttelettes d'eau chaude, de préférence sous la forme d'un brouillard, et un convoyeur 31 pour déplacer et faire circuler lesdits boulettes, boudins et / ou palets B à l'intérieur du tunnel de pasteurisation, en regard des buses de projection, à une vitesse prédéfinie pour atteindre le temps de traitement choisi.

Pour optimiser encore l'efficacité de l'élimination de la farine d'enrobage, l'installation de fabrication est préférentiellement conçue et configurée de manière que le système d'élimination de la farine d'enrobage F soumette les boulettes, boudins et / ou palets B audit flux de liquide FxLi (et de préférence audit fluide de gouttelettes d'eau chaude) alors que les boulettes, boudins et / ou palets B sont à une température moyenne supérieure à la température ambiante (de l'environnement de fabrication, typiquement comprise entre 15 °C et 35 °C), de préférence comprise entre 30 °C et 95 °C (et par exemple comprise entre 60 °C et 95 °C pour des boulettes, boudins et / ou palets B de constitution homogène, et par exemple comprise entre 30 °C et 60 °C pour des boulettes, boudins et / ou palets B de constitution hétérogène, comme expliqué en lien avec le procédé). Pour ce faire, le système d'élimination peut être avantageusement positionné au plus près du poste de malaxage et de cuisson simultanés 1 et du poste de formage 23, et l'installation peut être dépourvue de poste de refroidissement des boulettes, boudins et / ou palets B entre le système d'élimination et lesdits poste de malaxage et de cuisson simultanés 1 et poste de formage 23, de sorte que les boulettes, boudins et / ou palets B sortants du poste de formage 23 arrivent au niveau du système d'élimination alors qu'ils sont encore chauds. Il n'est ainsi pas nécessaire de prévoir la mise en œuvre d'un quelconque moyen de réchauffage des boulettes, boudins et / ou palets B en amont du système d'élimination de la farine d'enrobage F. Cela simplifie la conception et la mise en œuvre de l'installation, et en limite l'encombrement.

Bien évidemment, un tel système d'élimination de la farine d'enrobage F par soumission des boulettes, boudins et / ou palets B à un flux liquide FxLi pourrait bien évidemment, quoique de manière moins avantageuse, être de conception et configuration différentes de celles exposées ci-dessus. Ceci étant, il n'en reste pas moins préférable (bien qu'envisageable), pour les raisons déjà exposées en lien avec le procédé de fabrication, que le système d'élimination de la farine d'enrobage F soit dépourvu de dispositif d'immersion complète (et à plus forte raison, prolongée) des boulettes, boudins et / ou palets B dans un bain de liquide. Par ailleurs, conformément à ce qui a été précisé en lien avec le procédé de fabrication, les variantes « par flux gazeux » FxGa et « par flux liquide » FxLi décrites ci-avant ne sont pas nécessairement exclusives l'une de l'autre, dans la mesure où le système d'élimination de tout ou partie de la farine d'enrobage F pourrait avantageusement comprendre au moins un premier dispositif de soumission des boulettes, boudins et / ou palets B à au moins un flux d'un premier fluide, par exemple gazeux, et un deuxième dispositif de soumission des boulettes, boudins et / ou palets B à au moins un flux d'un deuxième fluide, différents du premier fluide et par exemple liquide. Par exemple, il est envisageable que le système d'élimination de la farine d'enrobage puisse ainsi comprendre :
- soit un (premier) dispositif de soumission des boulettes, boudins et / ou palets B à un premier flux gazeux (transporteur pneumatique 29, par exemple), et un (deuxième) dispositif de soumission des boulettes, boudins et / ou palets B à un deuxième flux liquide (tunnel de pasteurisation 32, par exemple), agencé en aval dudit premier dispositif (comme illustré en exemple à la figure 7) ;
- soit inversement un (premier) dispositif de soumission des boulettes, boudins et / ou palets à un premier flux liquide (tunnel de pasteurisation 32, par exemple), et un (deuxième) dispositif de soumission des boulettes, boudins et / ou palets à un deuxième flux gazeux (transporteur pneumatique 29, par exemple), agencé en aval dudit premier dispositif (non illustré).

Par ailleurs, si le recours à un flux Fx de fluide, gazeux FxGa ou liquide FxLi, s'avère particulièrement efficace pour éliminer la farine d'enrobage F présente à la surface extérieure des boulettes, boudins et / ou palets B, il reste pour autant parfaitement envisageable que le système d'élimination de la farine d'enrobage F comprenne, de manière complémentaire, un ou plusieurs moyens vibrants 33 (tel que par exemple, un crible vibrant, un tapis ou une bande de transport vibrant(e), etc.) contribuant mécaniquement à l'élimination de ladite farine d'enrobage F (figure 8).

Afin de garantir une conservation optimale du produit alimentaire sur de longues périodes, en particulier lorsque lesdits boulettes, boudins et / ou palets B n'ont pas subi de débactérisation thermocontrôlée comme évoquée ci-avant, l'installation de fabrication du produit alimentaire peut avantageusement comprendre, de préférence en aval du système d'élimination de la farine d'enrobage F :
- un poste de séchage 34 des boulettes, boudins et / ou palets B, conçu et configuré pour porter l'humidité relative de ces derniers à une valeur préférentiellement comprise entre une humidité relative sensiblement comprise entre 40 % et 60 % environ, de préférence comprise entre 45 % et 55 % environ (figures 5 à 8). De tout type connu adéquat, le poste de séchage 34 (ou sécheur) peut, par exemple, être avantageusement conçu et configuré pour soumettre, de préférence en continu, les boulettes, boudins et / ou palets B à un flux forcé d'air chaud ; et / ou
- un poste de refroidissement 35 (ou deuxième poste de refroidissement 35, le cas échéant) des boulettes, boudins et / ou palets B, conçu et configuré pour porter ces derniers à une température moyenne sensiblement comprise entre 2 °C et 15 °C. De tout type connu adéquat, et par exemple à étages horizontaux (figures 5 à 7) ou en spirale (figure 8), le poste de refroidissement 35 (ou refroidisseur) peut, par exemple, être avantageusement conçu et configuré pour soumettre, de préférence en continu, les boulettes, boudins et / ou palets B à un flux forcé d'air froid.

De préférence, l'installation de fabrication comprend, entre le poste de formage 24 et le système d'élimination de la farine d'enrobage F, un dispositif de calibrage 36 des boulettes, boudins et / ou palets B, par exemple à l'aide d'une plaque vibrante pourvue de trous de dimensions variables selon une direction de déplacement des boulettes, boudins et / ou palets B le long de ladite plaque. En tant que tel, le dispositif de calibrage 36 n'appartient pas au système d'élimination de la farine d'enrobage F, dans la mesure où son fonctionnement n'a qu'un impact très limité, sinon nul, sur la farine d'enrobage F présente sur la surface extérieure des boulettes, boudins et / ou palets B. Avantageusement, l'installation de fabrication du produit alimentaire comprend, en aval du système d'élimination de la farine d'enrobage F et, le cas échéant, en aval du poste de séchage 34 et / ou à du (deuxième) poste de refroidissement 30 des boulettes, boudins et / ou palets B, un poste de conditionnement 37 du produit alimentaire sous la forme d'une quantité choisie de boulettes, boudins et / ou palets B. Le poste de conditionnement 37 peut être avantageusement conçu et configuré pour conditionner le produit alimentaire en sachet ou en barquette par exemple, et de préférence sous atmosphère contrôlée ou modifiée (par exemple sous une atmosphère formée par un mélange de 30 % à 70 % de dioxyde de carbone CO₂ et de 30 % à 70 % de diazote N₂).

Des essais de fabrication d'un produit alimentaire sous forme de boulettes ont été réalisés avec un mélange comprenant 18 % en masse de flocons déshydratés de tubercule de *Solanum tuberosum* 30 % en masse de semoule de blé dur en tant que céréale contenant des protéines capables de former du gluten, 49 % d'eau en tant que liquide d'hydratation, et 3 % en masse du sel et d'huile végétale. Les ingrédients et liquide d'hydratation susvisés ont été introduits séparément en entrée de la chambre interne 4 du réceptacle 3 d'un malaxeur-cuiseur 2 comprenant un arbre 6 rotatif à pales 15, 15A, 15B et une enveloppe de chauffe 14, tel que décrit ci-avant et illustré aux figures. L'enveloppe de chauffe 14 a été alimentée en vapeur d'eau en tant que fluide caloporteur. Par ailleurs, l'arbre 6 à pales du malaxeur-cuiseur 2 a été mis en rotation à une vitesse suffisante pour provoquer une centrifugation du mélange et la formation contre la paroi intérieure 5 chauffée de la chambre interne 4, d'une couche de mélange d'épaisseur e moyenne comprise entre 1 mm et 40 mm. Après mise en forme de la composition pâteuse obtenue sous forme de boulettes, ces dernières ont été réchauffées à la poêle avec un peu de matière grasse, en vue de leur dégustation par un panel d'experts.

Conformément à ce qui a été présenté précédemment, la mise en œuvre d'une étape de malaxage et de cuisson simultanés non conforme à l'invention, c'est-à-dire la mise en oeuvre d'un temps de malaxage-cuisson simultanés inférieur à 1 min ou supérieur à 15 min, et / ou d'une température de composition pâteuse à l'issue de l'étape de malaxage et de cuisson simultanés inférieure à 80 °C ou supérieure à 100 °C, conduit à l'obtention de caractéristiques viscoélastiques de la composition pâteuse C telles que le produit alimentaire présente, après cuisson ou réchauffage, une texture qui est soit trop molle, pâteuse, soit au contraire trop ferme voire « caoutchouteuse ». Qui plus est, il s'avère même parfois particulièrement difficile, si non impossible, de former convenablement des boulettes à partir de la composition pâteuse.

Les résultats d'une série d'essais de fabrication d'un produit alimentaire sous forme de boulettes, conformément à l'invention cette fois, sont présentés ci-après. Ces essais, arbitrairement numérotés de 1 à 8 (tableaux 1 et 2), ont été réalisés avec le mélange et selon conditions opératoires générales décrits ci-dessus.

**Tableau 1**

| **Essais** | **T° vapeur d'eau (°C)** | **T° liquide d'hydratation (°C)** | **Intensité moteur (A)** | **T° composition pâteuse en sortie (°C)** | **Temps de malaxage-cuisson** | **Humidité relative (%)** |
|---|---|---|---|---|---|---|
| 1 | 120 | 70 | 147 | 91 | 2 min 42 s | 50,6 |
| 2 | 120 | 70 | 165 | 98 | 2 min 20 s | 47,7 |
| 3 | 120 | 70 | 190 | 99 | 10 min | 42 |
| 4 | 135 | 55 | 152 | 92 | 2 min 25 s | 50,3 |
| 5 | 150 | 40 | 147 | 88 | 2 min 20 s | 51,6 |
| 6 | 150 | 70 | 145 | 88,5 | 2 min 02 s | 48,5 |
| 7 | 150 | 100 | 175 | 100 | 2 min | 44 |
| 8 | 135 | 58 | 164 | 97,9 | 3 min 14 s | 48 |

L'intensité moteur traduit, dans le premier tableau ci-dessus, l'effort mécanique exercé par les pales de malaxage à l'encontre du mélange au cours de l'étape de malaxage et de cuisson simultanés.

**Tableau 2**

| **Essais** | **Composition pâteuse** | **Produit alimentaire (boulettes) après réchauffage à la pôele** | | | |
|---|---|---|---|---|---|
| | **Note du caractère collant de la composition (de 1 à 5)** | **Note du caractère ferme en bouche (de 1 à 5)** | **Note du caractère pâteux en bouche (de 1 à 5)** | **Note du caractère élastique (de 1 à 5)** | **Commentaire dégustation** |
| 1 | 1 | 2 | 2 | 3 | Produit satisfaisant, élastique et fondant |
| 2 | 1 | 3 | 1 | 4 | Produit satisfaisant, élastique et fondant |
| 3 | 1 | 5 | 1 | 5 | Produit moins satisfaisant, un peu trop dur et compact |
| 4 | 1 | 3 | 2 | 3 | Produit satisfaisant, élastique et fondant |
| 5 | 5 | 1 | 4 | 2 | Produit satisfaisant, élastique et fondant, mais un peu trop pâteux |
| 6 | 2 | 3 | 2 | 1 | Produit satisfaisant, fondant mais manquant un peu d'élasticité |
| 7 | 1 | 5 | 1 | 5 | Produit moins satisfaisant, un peu trop dur et compact |
| 8 | 1 | 3 | 1 | 3 | Produit très satisfaisant, élastique et fondant |

Il est à noter que les termes « amont » et « aval » sont employés dans la description de l'invention ci-dessus pour traduire un enchaînement chronologique des différentes étapes et opérations du procédé de fabrication (le terme « amont » signifiant « antérieurement », le terme « aval »signifiant « postérieurement »), et sont donc symétriquement à considérer en lien avec le sens de progression (indiqué par des flèches aux figures) de la composition pâteuse C et des boulettes, boudins et / ou palets B au sein de l'installation (non revendiquée) de fabrication du produit alimentaire.

En définitive, il ressort de ce qui précède que le nouveau procédé de fabrication conforme à l'invention et la nouvelle installation de fabrication décrite permettent l'obtention d'un produit alimentaire sous forme de boulettes, de boudins ou encore de palets B qui, non seulement peut être simplement et rapidement cuit ou réchauffé par un consommateur (typiquement dépourvu de compétences culinaires particulières), mais présente en outre des propriétés organoleptiques améliorées, tant avant qu'après cuisson ou réchauffage. Le nouveau procédé et la nouvelle installation (non revendiquée) de fabrication proposés sont est avantageusement de conception et de mise en œuvre relativement simples. Ils permettent la fabrication dudit produit alimentaire à cadence élevée, en particulier dans un contexte industriel, et qui plus est à coûts maîtrisés, et avec l'encombrement matériel particulièrement bien maîtrisé. Par ailleurs, le nouveau procédé et la nouvelle installation (non revendiquée) proposés permettent avantageusement la fabrication d'un produit alimentaire qui conserve longtemps d'excellentes qualités, tant organoleptiques que bactériologiques, avant sa cuisson ou son réchauffage.

### POSSIBILITE D'APPLICATION INDUSTRIELLE

L'invention trouve son application dans la conception de procédés de fabrication de produits alimentaires sous forme de boulettes, de boudins et / ou encore de palets, et plus spécifiquement d'un produit alimentaire sous forme de boulettes, de boudins et / ou palets destiné à être réchauffé ou cuit avant d'être consommé, ainsi que dans le domaine de la fabrication de tels produits alimentaires.

## Revendications

1. Procédé de fabrication d'un produit alimentaire sous forme de boulettes, boudins et / ou palets (B), destiné à être réchauffé ou cuit avant d'être consommé, comprenant :
- une étape de malaxage et de cuisson simultanés d'un mélange formé à partir au moins d'une farine et / ou d'une semoule d'au moins une céréale contenant des protéines capables de former du gluten, d'un produit de tubercule de *Solanum tuberosum* et d'un liquide d'hydratation, pour obtenir une composition pâteuse (C), et
- une étape de formage de boulettes, boudins et / ou palets (B) à partir de ladite composition pâteuse (C),
ledit mélange étant malaxé et cuit pendant un temps de malaxage-cuisson compris entre 1 min et 15 min, et de manière qu'à l'issue de ladite étape de malaxage et de cuisson simultanés, ladite composition pâteuse (C) présente une température moyenne comprise entre 80 °C et 100 °C.

2. Procédé selon la revendication précédente, dans lequel la température moyenne de la composition pâteuse (C) à l'issue de l'étape de malaxage et de cuisson simultanés est d'une part strictement supérieure à 90 °C et d'autre part inférieure ou égale à 100 °C, et de préférence encore égale à 98 °C.

3. Procédé selon l'une quelconque des revendications précédentes, dans lequel le temps de malaxage-cuisson est compris entre 1 min et 10 min, de préférence compris entre 1 min et 8 min, de préférence compris entre 1 min et 5 min, de préférence encore compris entre 2 min et 5 min.

4. Procédé selon l'une quelconque des revendications précédentes, dans lequel la composition pâteuse (C) présente, à l'issue de l'étape de malaxage et de cuisson simultanés, une humidité relative comprise entre 30 % et 70 %, et de préférence comprise entre 45 % et 60 %.

5. Procédé selon l'une quelconque des revendications précédentes, dans lequel ledit liquide d'hydratation est à une température initiale comprise entre 30 °C et 80 °C.

6. Procédé selon l'une quelconque des revendications précédentes, dans lequel ladite étape de formage des boulettes, boudins et / ou palets (B) est réalisée alors que la température de la composition pâteuse (C) est encore comprise entre 50 °C et 100 °C, et de préférence comprise entre 80 °C et 95 °C.

7. Procédé selon l'une quelconque des revendications précédentes, dans lequel ladite étape de malaxage et de cuisson simultanés est réalisée à l'aide d'au moins un malaxeur-cuiseur (2) comprenant un réceptacle (3) définissant une chambre interne (4) pourvue d'une paroi intérieure (5), un arbre (6) monté à rotation au sein de ladite chambre interne (4) et pourvu de moyens de malaxage (7), et un moyen de chauffage (8) de ladite paroi intérieure (5) pour porter cette dernière à une température préférentiellement comprise entre 100 °C et 160 °C.

8. Procédé selon la revendication précédente, dans lequel la chambre interne (4) s'étend entre une première extrémité (9A) et une deuxième extrémité (9B) opposée selon une direction d'extension longitudinale moyenne (X-X'), l'arbre (6) étant monté à rotation au sein de ladite chambre interne (4) selon un axe de rotation (Y-Y') parallèle à la direction d'extension longitudinale moyenne (X-X') de la chambre interne (4), lesdits moyens de malaxage (7) étant conformés et configurés pour entraîner une progression du mélange au sein de la chambre interne (4) en direction de la deuxième extrémité (9B) de cette dernière.

9. Procédé selon l'une quelconque des revendications 7 et 8, dans lequel lesdits moyens de malaxage (7) sont formés de pales (15, 15A, 15B), de préférence distinctes et distantes les unes des autres, qui s'étendent chacune à partir de l'arbre (6) de manière radiale à l'axe de rotation (Y-Y') de ce dernier.

10. Procédé selon la revendication précédente, dans lequel l'arbre (6) est commandé à rotation à une vitesse suffisante pour provoquer une centrifugation du mélange et la formation, contre la paroi intérieure (5) chauffée de la chambre interne (4), d'une couche dudit mélange, laquelle couche présente de préférence une épaisseur (e) moyenne comprise entre 1 mm et 40 mm, et plus préférentiellement comprise entre 2 mm et 30 mm.

11. Procédé selon la revendication précédente, dans lequel chacune desdites pales (15, 15A, 15B) présente une extrémité distale (17), opposée à une extrémité proximale au niveau de laquelle les pales (15, 15A, 15B) sont fixées à l'arbre (6), et qui est agencée à distance de la paroi intérieure (5) de la chambre interne (4), et de préférence à une distance (d) comprise entre 1 mm et 10 mm.

12. Procédé selon la revendication 8 et l'une quelconque des revendications 9 à 11, dans lequel ledit malaxeur-cuiseur (2) comprend au moins
- une première portion de travail (18A), qui s'étend axialement entre les première et deuxième extrémités (9A, 9B) de la chambre interne (4) et dans laquelle les pales (15A) présentent une première orientation angulaire relativement à l'axe de rotation (Y-Y') de l'arbre (6), pour entraîner une progression axiale du mélange au sein de ladite première portion de travail (18A) à une première vitesse, et
- une deuxième portion de travail (18B), qui prolonge axialement la première portion de travail (18A) en direction de la deuxième extrémité (9B) de la chambre interne (4) et dans laquelle les pales (15B) présentent une deuxième orientation angulaire différente de ladite première orientation angulaire, pour entraîner une progression axiale du mélange au sein de ladite deuxième portion de travail (18B) à une deuxième vitesse, inférieure à ladite première vitesse, ladite deuxième orientation angulaire étant préférentiellement inversée par rapport à la première orientation angulaire.

13. Procédé selon la revendication précédente, dans laquelle la longueur (L2) de la deuxième portion de travail (18B) suivant l'axe de rotation (Y-Y') de l'arbre (6) est inférieure ou égale à la longueur (L1) respective de la première portion de travail (18A).

14. Procédé selon l'une quelconque des revendications précédentes, dans lequel ladite étape de formage des boulettes, boudins et / ou palets (B) comprend une opération d'association de ladite composition pâteuse (C) avec une farce (G), de préférence par co-extrusion de ladite composition pâteuse (C) et de ladite farce (G).

## Patentansprüche

1. Verfahren zur Herstellung eines Lebensmittelprodukts in Form von Bällchen, Würsten und/oder Scheiben (B), das dazu bestimmt ist, vor dem Verzehr wieder erhitzt oder gekocht zu werden, umfassend :
- einen Schritt des gleichzeitigen Knetens und Kochens einer Mischung gebildet aus mindestens einem Mehl und/oder einem Grieß von mindestens einem Getreide, das Proteine enthält, die in der Lage sind, Gluten zu bilden, einem Produkt der Knolle von *Solanum tuberosum* und einer Hydratationsflüssigkeit, um eine pastöse Zusammensetzung (C) zu erhalten, und
- einem Schritt zur Formung von Bällchen, Würsten und/oder Scheiben (B) aus besagter pastöser Zusammensetzung (C),
wobei besagte Mischung geknetet und während einer Knet- und Kochzeit zwischen 1 min und 15 min gekocht wird, und zwar so, dass besagte pastöse Zusammensetzung (C) am Ende besagten Schrittes des gleichzeitigen Knetens und Kochens eine mittlere Temperatur zwischen 80 °C und 100 °C aufweist.

2. Verfahren nach dem vorhergehenden Anspruch, wobei die mittlere Temperatur der pastösen Zusammensetzung (C) am Ende des Schrittes des gleichzeitigen Knetens und Kochens einerseits strikt größer als 90 °C und andererseits kleiner oder gleich 100 °C ist, und vorzugsweise noch gleich 98 °C ist.

3. Verfahren nach einem der vorhergehenden Ansprüche, bei dem die Zeit für das Kneten-Kochen zwischen 1 min und 10 min beträgt, vorzugsweise zwischen 1 min und 8 min, vorzugsweise zwischen 1 min und 5 min, besonders bevorzugt zwischen 2 min und 5 min.

4. Verfahren nach einem der vorhergehenden Ansprüche, wobei die pastöse Zusammensetzung (C) nach dem Schritt des gleichzeitigen Knetens und Kochens eine relative Feuchtigkeit zwischen 30 % und 70 % aufweist, vorzugsweise zwischen 45 % und 60 %.

5. Verfahren nach einem der vorhergehenden Ansprüche, wobei die Hydratationsflüssigkeit eine Anfangstemperatur zwischen 30 °C und 80 °C hat.

6. Verfahren nach einem der vorhergehenden Ansprüche, wobei der Schritt des Formens der Bällchen, Würste und/oder Scheiben (B) durchgeführt wird, während die Temperatur der pastösen Zusammensetzung (C) noch zwischen 50 °C und 100 °C liegt, und vorzugsweise zwischen 80 °C und 95 °C.

7. Verfahren nach einem der vorhergehenden Ansprüche, wobei der Schritt des gleichzeitigen Knetens und Kochens mit Hilfe mindestens eines Knet-Kochers (2) durchgeführt wird, der einen Behälter (3) umfasst, der eine innere Kammer (4) ausgebildet mit einer inneren Wand (5) definiert, eine Welle (6), die drehbar in besagter innerer Kammer (4) montiert und mit Knetmitteln (7) versehen ist, und ein Heizmittel (8) für besagte Innenwand (5), um letztere auf eine Temperatur zu bringen, die vorzugsweise zwischen 100 °C und 160 °C liegt.

8. Verfahren nach dem vorhergehenden Anspruch, wobei sich besagte innere Kammer (4) zwischen einem ersten Ende (9A) und einem gegenüberliegenden zweiten Ende (9B) entlang einer mittleren Längserstreckungsrichtung (X-X') erstreckt, wobei die Welle (6) innerhalb besagter innerer Kammer (4) um eine Drehachse (Y-Y') parallel zu der mittleren Längserstreckungsrichtung (X-X') drehbar gelagert ist, wobei die Knetmittel (7) so geformt und konfiguriert sind, dass sie einen Vorschub der Mischung innerhalb der inneren Kammer (4) in Richtung des zweiten Endes (9B) der letzteren bewirken.

9. Verfahren gemäß einem der Ansprüche 7 und 8, wobei die Knetmittel (7) aus Schaufeln (15, 15A, 15B) gebildet sind, die vorzugsweise getrennt und voneinander beabstandet sind, welche sich jeweils von der Welle (6) in radialer Weise zu der Drehachse (Y-Y') der Letzteren erstrecken.

10. Verfahren nach Anspruch 9, wobei die Welle (6) so gesteuert wird, dass sie sich mit einer Geschwindigkeit dreht, die ausreicht, um ein Zentrifugieren der Mischung und die Bildung einer Schicht der besagten Mischung an der beheizten inneren Wand (5) der inneren Kammer (4) zu bewirken, wobei diese Schicht vorzugsweise eine mittlere Dicke (e) zwischen 1 mm und 40 mm aufweist, und noch bevorzugter zwischen 2 mm und 30 mm.

11. Verfahren nach dem vorhergehenden Anspruch, wobei jede der Schaufeln (15, 15A, 15B) ein distales Ende (17) aufweist, welches einem proximalen Ende entgegengesetzt ist, an welchem die Schaufeln (15, 15A, 15B) an der Welle (6) befestigt sind, und das in einem Abstand von der inneren Wand (5) der inneren Kammer (4) angeordnet ist, und vorzugsweise in einem Abstand (d) zwischen 1 mm und 10 mm.

12. Verfahren nach Anspruch 8 und einem der Ansprüche 9 bis 11, wobei besagter Knet-Kocher (2) mindestens
- einen ersten Arbeitsabschnitt (18A) umfasst, der sich axial zwischen dem ersten und dem zweiten Ende (9A, 9B) der Innenkammer (4) erstreckt und in dem die Schaufeln (15A) eine erste Winkelausrichtung in Bezug auf die Drehachse (Y-Y') der Welle (6) aufweisen, um einen axialen Vorschub der Mischung innerhalb des besagten ersten Arbeitsabschnitts (18A) mit einer ersten Geschwindigkeit zu bewirken, und
- einen zweiten Arbeitsabschnitt (18B), der den ersten Arbeitsabschnitt (18A) axial in Richtung des zweiten Endes (9B) der Innenkammer (4) verlängert und in dem die Schaufeln (15B) eine zweite Winkelausrichtung aufweisen, die sich von der besagten ersten Winkelausrichtung unterscheidet, um einen axialen Vorschub der Mischung innerhalb des besagten zweiten Arbeitsabschnitts (18B) mit einer zweiten Geschwindigkeit zu bewirken, die geringer ist als besagte erste Geschwindigkeit, wobei besagte zweite Winkelausrichtung bevorzugt umgekehrt ist im Vergleich zu der ersten Winkelausrichtung.

13. Verfahren nach dem vorhergehenden Anspruch, wobei die Länge (L2) des zweiten Arbeitsabschnitts (18B) entlang der Drehachse (Y-Y') der Welle (6) kleiner oder gleich der jeweiligen Länge (L1) des ersten Arbeitsabschnitts (18A) ist.

14. Verfahren nach einem der vorhergehenden Ansprüche, wobei der Schritt des Formens der Kügelchen, Würste und/oder Scheiben (B) einen Vorgang des Kombinierens der pastösen Zusammensetzung (C) mit einer Füllung (G) umfasst, vorzugsweise durch Co-Extrusion der pastösen Zusammensetzung (C) und der Füllung (G).

## Claims

1. A method for manufacturing a food product in the form of balls, logs and/or patties (B), intended to be reheated or cooked before being consumed, comprising:
- a step of simultaneously kneading and cooking a mixture formed from at least flour and/or semolina of at least one cereal containing proteins capable of forming gluten, *Solanum tuberosum* tuber product and hydration liquid, to obtain a pasty composition (C), and
- a step of forming balls, logs and/or patties (B) from said pasty composition (C),
said mixture being kneaded and cooked for a kneading-cooking time comprised between 1 min and 15 min, and such that at the end of said simultaneous kneading and cooking step, said pasty composition (C) has an average temperature comprised between 80°C and 100°C.

2. The method according to the preceding claim, wherein the average temperature of the pasty composition (C) at the end of the simultaneous kneading and cooking step is, on the one hand, strictly greater than 90°C and, on the other hand, less than or equal to 100°C, and more preferably equal to 98°C.

3. The method according to any one of the preceding claims, wherein the kneading-cooking time is comprised between 1 min and 10 min, preferably comprised between 1 min and 8 min, preferably comprised between 1 min and 5 min, more preferably comprised between 2 min and 5 min.

4. The method according to any one of the preceding claims, wherein the pasty composition (C) has, at the end of the simultaneous kneading and cooking step, a relative humidity comprised between 30% and 70%, and preferably comprised between 45% and 60%.

5. The method according to any one of the preceding claims, wherein said hydration liquid is at an initial temperature comprised between 30°C and 80°C.

6. The method according to any one of the preceding claims, wherein said step of forming the balls, logs and/or patties (B) is carried out while the temperature of the pasty composition (C) is still comprised between 50°C and 100°C, and preferably comprised between 80°C and 95°C.

7. The method according to any one of the preceding claims, wherein said simultaneous kneading and cooking step is carried out using at least one kneader-cooker (2) comprising a receptacle (3) defining an internal chamber (4) provided with an inner wall (5), a shaft (6) rotatably mounted within said internal chamber (4) and provided with kneading means (7), and a means (8) for heating said inner wall (5) to bring the latter to a temperature preferentially comprised between 100°C and 160°C.

8. The method according to the preceding claim, wherein the internal chamber (4) extends between a first end (9A) and a second end (9B) opposite in an average longitudinal extension direction (X-X'), the shaft (6) being rotatably mounted within said internal chamber (4) along an axis of rotation (Y-Y') parallel to the average longitudinal extension direction (X-X') of the internal chamber (4), said kneading means (7) being shaped and configured to cause the mixture to progress within the internal chamber (4) towards the second end (9B) of the latter.

9. The method according to any one of claims 7 and 8, wherein said kneading means (7) are formed of blades (15, 15A, 15B), preferably distinct and spaced apart from each other, which each extend from the shaft (6) radially to the axis of rotation (Y-Y') of the latter.

10. The method according to the preceding claim, wherein the shaft (6) is controlled to rotate at a speed sufficient to cause a centrifugation of the mixture and the formation, against the heated inner wall (5) of the internal chamber (4), of a layer of said mixture, which layer preferably has an average thickness (e) comprised between 1 mm and 40 mm, and more preferentially comprised between 2 mm and 30 mm.

11. The method according to the preceding claim, wherein each of said blades (15, 15A, 15B) has a distal end (17), opposite a proximal end at which the blades (15, 15A, 15B) are fastened to the shaft (6), and which is arranged at a distance from the inner wall (5) of the internal chamber (4), and preferably at a distance (d) comprised between 1 mm and 10 mm.

12. The method according to claim 8 and any one of claims 9 to 11, wherein said kneader-cooker (2) comprises at least
- a first working portion (18A), which extends axially between the first and second ends (9A, 9B) of the internal chamber (4) and in which the blades (15A) have a first angular orientation relative to the axis of rotation (Y-Y') of the shaft (6), to cause an axial progression of the mixture within said first working portion (18A) at a first speed, and
- a second working portion (18B), which axially extends the first working portion (18A) towards the second end (9B) of the internal chamber (4) and in which the blades (15B) have a second angular orientation different from said first angular orientation, to cause an axial progression of the mixture within said second working portion (18B) at a second speed, less than said first speed, said second angular orientation being preferentially reversed with respect to the first angular orientation.

13. The method according to the preceding claim, wherein the length (L2) of the second working portion (18B) along the axis of rotation (Y-Y') of the shaft (6) is less than or equal to the respective length (L1) of the first working portion (18A).

14. The method according to any one of the preceding claims, wherein said step of forming the balls, logs and/or patties (B) comprises an operation of associating said pasty composition (C) with a stuffing (G), preferably by co-extrusion of said pasty composition (C) and said stuffing (G).
